# EUROPEAN PATENT SPECIFICATION

(11) **EP 3 792 522 B1**
(45) Date of publication and mention of the grant of the patent: **06.04.2022**
(21) Application number: 20194046.7
(22) Date of filing: 02.09.2020
(51) Int. Cl.: F16H 3/089, F16H 3/06

(54) **TRANSMISSION AND VEHICLE**
GETRIEBE UND FAHRZEUG
TRANSMISSION ET VÉHICULE

(30) Priority: 13.09.2019 JP 2019167531
(43) Date of publication of application: 17.03.2021
(73) Proprietor: YAMAHA HATSUDOKI KABUSHIKI KAISHA, Iwata-shi Shizuoka 438-8501 (JP)
(72) Inventor: KANZAKI, Yuya, Iwata-shi Shizuoka 438-8501 (JP)
(74) Representative: Grünecker Patent- und Rechtsanwälte PartG mbB

(56) References cited:
- EP-A1- 1 741 955
- JP-A- 2011 112 197
- US-A1- 2018 119 749
- US-A1- 2018 328 454

## Description

### TECHNICAL FIELD

The present invention relates to a transmission and a vehicle.

### BACKGROUND ART

So-called dog-clutch type stepped transmissions have been used in vehicles such as motorcycles, for example. A dog-clutch type stepped transmission includes a drive shaft to be driven by a drive source such as an internal combustion engine, a driven shaft, a plurality of drive gears that are provided on the drive shaft, and a plurality of driven gears that are provided on the driven shaft and are respectively in mesh with the drive gears. At least one of the drive gears is configured to be movable in the axial direction of the drive shaft, and at least one of the driven gears is configured to be movable in the axial direction of the driven shaft. With this transmission, the gear ratio is changed by changing the combination of a drive gear and a driven gear between which power is transmitted.

When a gear moves in the axial direction, the gear itself may tilt. That is, the gear may incline relative to the axial direction. This may lead to a poor mesh of the gear with another gear, thereby deteriorating the power transmission efficiency. In view of this, a transmission has been proposed in the art in which gears are configured so as not to move in the axial direction. Japanese Laid-Open Patent Publication No. 2011-112197 discloses a transmission in which drive gears are configured to be unmovable in the axial direction of the drive shaft and driven gears are configured to be unmovable in the axial direction of the driven shaft.

The transmission disclosed in Japanese Laid-Open Patent Publication No. 2011-112197 includes a plurality of drive gears that are attached to the drive shaft so as to be unrotatable and axially unmovable relative to the drive shaft, a plurality of driven gears that are attached to the driven shaft so as to be axially unmovable and rotatable relative to the driven shaft, and slide rings that are attached to the driven shaft so as to be axially movable and unrotatable relative to the driven shaft. Each driven gear includes dogs protruding in the axial direction. Each slide ring includes engagement holes into which dogs are inserted. For example, when a slide ring is moved toward the first driven gear, the engagement holes of the slide ring engage with the dogs of the first driven gear so that power can be transmitted between the first driven gear and the slide ring. Then, power is transmitted in the following order: the drive shaft, the first drive gear in mesh with the first driven gear, the first driven gear, the slide ring, and the driven shaft. As a result, power is transmitted with a gear ratio that is determined by the first drive gear and the first driven gear. On the other hand, when the slide ring is moved toward the second driven gear, the engagement holes of the slide ring engage with the dogs of the second driven gear so that power can be transmitted between the second driven gear and the slide ring. Then, power is transmitted in the following order: the drive shaft, the second drive gear in mesh with the second driven gear, the second driven gear, the slide ring, and the driven shaft. As a result, power is transmitted with a gear ratio that is determined by the second drive gear and the second driven gear.

With the transmission described above, the drive gears and the driven gears do not move in the axial direction, and the tilting described above is unlikely to occur.

### SUMMARY OF INVENTION

### TECHNICAL PROBLEM

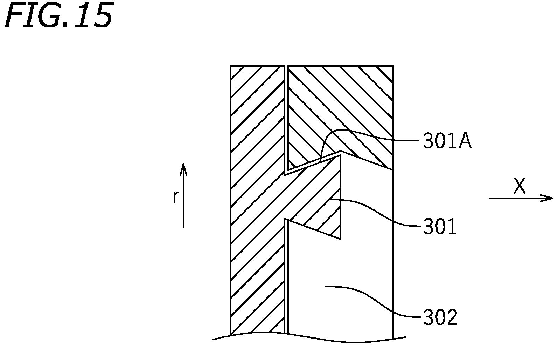

Now, with dog-clutch type stepped transmissions, dogs **301** are normally inversely tapered as schematically shown in FIG. **15****.** That is, the side surface **301A** of each dog **301** is inclined from the axial direction so as to extend in the rotation direction while extending toward the distal end. Note that in FIG. **15****,** designation **X** represents one direction in the axial direction, and designation r represents the rotation direction. As the dogs **301** are inversely tapered as described above, it is possible to prevent the dog **301** from inadvertently coming off an engagement hole **302.**

However, it takes time and effort to inversely taper the dogs **301.** This complicates the machining process for the transmission, and leads to an increase of cost.

An object of the present invention, which has been made to solve such a problem, is to provide a transmission and a vehicle having the same, with which it is possible to prevent dogs from inadvertently coming off engagement holes while avoiding complicating the machining process and avoiding an increase of cost.

### SOLUTION TO PROBLEM

A transmission disclosed herein includes: a first rotating shaft; a second rotating shaft arranged parallel to the first rotating shaft; a first gear attached to the first rotating shaft so as to be unrotatable and axially unmovable relative to the first rotating shaft; a second gear that is attached to the second rotating shaft so as to be rotatable and axially unmovable relative to the second rotating shaft and is in mesh with the first gear; and a slide ring that is attached to the second rotating shaft so as to be unrotatable and axially movable relative to the second rotating shaft and is adjacent to the second gear in an axial direction. The second gear includes dogs that protrude in the axial direction. The slide ring includes engagement holes into which the dogs are inserted. The dogs each include a contact surface formed on a rotation direction side or on an opposite side from the rotation direction side, wherein the contact surface is in contact with an edge portion of the engagement hole while a torque is being transmitted between the second gear and the slide ring. The contact surface extends straight in the axial direction. The first gear and the second gear are helical gears each including a plurality of teeth that are inclined relative to the axial direction, and are configured so that the second gear receives, from the first gear, a thrust force in a direction toward the slide ring.

With the transmission described above, the first gear and the second gear are helical gears. The teeth of a helical gear are inclined relative to the axial direction. Therefore, when transmitting a torque, the first gear and the second gear not only receive a force in the rotation direction but also receive a force in the axial direction (i.e., a thrust force). In the transmission described above, the first gear and the second gear are configured so that the second gear receives, from the first gear, a thrust force in the direction toward the slide ring. Therefore, the dogs provided on the second gear are unlikely to come off the engagement holes formed in the slide ring. Thus, even if the dogs are not inversely tapered, the dogs are prevented from inadvertently coming off the engagement holes. In the transmission described above, the engagement holes are formed in the slide ring. It is easier to ensure a sufficient mechanical strength of the second gear as compared with a case where the engagement holes are formed in the second gear. In the transmission described above, the contact surfaces of the dogs extend straight in the axial direction, and the dogs do not need to be inversely tapered. Therefore, it is possible to prevent the dogs from inadvertently coming off the engagement holes while avoiding complicating the machining process and avoiding an increase of cost.

According to one preferred embodiment, the first rotating shaft is a drive shaft that is driven by a drive source. The second rotating shaft is a driven shaft that is driven by the drive shaft. The contact surface is formed on the rotation direction side of the dog. Teeth of the second gear are inclined from the axial direction so as to extend toward an opposite side from the slide ring side while extending toward a rotation direction side.

According to one preferred embodiment, the second rotating shaft is a drive shaft that is driven by a drive source. The first rotating shaft is a driven shaft that is driven by the drive shaft. The contact surface is formed on an opposite side from the rotation direction side of the dog. Teeth of the second gear are inclined from the axial direction so as to extend toward the slide ring side while extending toward the rotation direction side.

According to one preferred embodiment, the transmission includes: two or more other first gears that are attached to the first rotating shaft so as to be axially unmovable relative to the first rotating shaft; two or more other second gears that are attached to the second rotating shaft so as to be axially unmovable relative to the second rotating shaft; and another slide ring that is attached to the second rotating shaft so as to be unrotatable and axially movable relative to the second rotating shaft and is adjacent to at least one of the other second gears in the axial direction. All of the other first gears are attached to the first rotating shaft so as to be unrotatable relative to the first rotating shaft. All of the other second gears are attached to the second rotating shaft so as to be rotatable relative to the second rotating shaft. The other second gears include other dogs that protrude in the axial direction. The other slide ring includes other engagement holes into which the other dogs are inserted. The other dogs each include another contact surface formed on a rotation direction side or an opposite side from the rotation direction side, wherein the other contact surface is in contact with an edge portion of the other engagement hole while a torque is being transmitted between the other second gears and the other slide ring. The other contact surface extends straight in the axial direction. The other first gears and the other second gears are helical gears each including a plurality of teeth that are inclined relative to the axial direction, and are configured so that the other second gears receive, from the other first gears, a thrust force in a direction toward the other slide ring.

According to the embodiment described above, a plurality of slide rings are attached to the same shaft (i.e., the second rotating shaft). It is possible to simplify, and reduce the size of, the mechanism for axially moving the slide rings, as compared with a case where those slide rings are attached separately to different shafts (i.e., the first rotating shaft and the second rotating shaft).

According to one preferred embodiment, the transmission includes: two or more other first gears that are attached to the drive shaft so as to be axially unmovable relative to the drive shaft; two or more other second gears that are attached to the driven shaft so as to be axially unmovable relative to the driven shaft; and another slide ring that is attached to the driven shaft so as to be unrotatable and axially movable relative to the driven shaft and is adjacent to at least one of the other second gears in the axial direction. All of the other first gears are attached to the drive shaft so as to be unrotatable relative to the drive shaft. All of the other second gears are attached to the driven shaft so as to be rotatable relative to the driven shaft. Each of the second gear and the other second gears has a diameter that is larger than one of the first gears that meshes with the second gear. The other second gears include other dogs that protrude in the axial direction. The other slide ring includes other engagement holes into which the other dogs are inserted. The other dogs each include another contact surface formed on a rotation direction side or an opposite side from the rotation direction side, wherein the other contact surface is in contact with an edge portion of the other engagement hole while a torque is being transmitted between the other second gears and the other slide ring. The other contact surface extends straight in the axial direction. The other first gears and the other second gears are helical gears each including a plurality of teeth that are inclined relative to the axial direction, and are configured so that the other second gears receive, from the other first gears, a thrust force in a direction toward the other slide ring.

According to the embodiment described above, a plurality of slide rings are attached to the same shaft (i.e., the second rotating shaft). It is possible to simplify, and reduce the size of, the mechanism for axially moving the slide rings, as compared with a case where those slide rings are attached separately to different shafts (i.e., the first rotating shaft and the second rotating shaft). Since the diameter of the second gear is larger than the diameter of the first gear, there is a large space for the provision of the dogs. Therefore, it is easy to provide the dogs on the second gear. The dogs can be arranged at positions that are farther away from the center of the second rotating shaft, thereby making it easier to perform the operation of inserting the dogs into the engagement holes and the operation of pulling the dogs out of the engagement holes. Thus, it is possible to realize an even better gear-shifting feel.

According to one preferred embodiment, the transmission includes: a first press-fit gear that is press-fit to the first rotating shaft so as to be unrotatable and axially unmovable relative to the first rotating shaft; a second mesh gear that is attached to the second rotating shaft so as to be rotatable and axially unmovable relative to the second rotating shaft and meshes with the first press-fit gear; and a bearing that is arranged on a first side in the axial direction relative to the first press-fit gear, the first gear and the other first gears, and rotatably supports the first rotating shaft. The first press-fit gear is arranged on the first side in the axial direction relative to the first gear and the other first gears. The first press-fit gear and the second mesh gear are helical gears each including a plurality of teeth that are inclined relative to the axial direction, and are configured so that the first press-fit gear receives, from the second mesh gear, a thrust force in a direction toward a second side in the axial direction, wherein the second side in the axial direction is generally opposite to the first side in the axial direction.

According to the embodiment described above, since the first press-fit gear is press-fit to the first rotating shaft, if a large force is applied to the first side in the axial direction, the first press-fit gear may move toward the first side in the axial direction to contact with the bearing. However, the first press-fit gear and the second mesh gear are helical gears, and the first press-fit gear receives a thrust force in the direction from the second mesh gear toward the second side in the axial direction. This suppresses the movement of the first press-fit gear toward the first side in the axial direction. Therefore, it is possible to prevent contact between the first press-fit gear and the bearing.

According to one preferred embodiment, the transmission includes: first-speed to sixth-speed transmission gear pairs having different gear ratios, wherein at least the third-speed to sixth-speed transmission gear pairs are the first gear, the second gear, the other first gears and the other second gears; a first bearing that is arranged on a first side in the axial direction relative to the first gear and the other first gears, and rotatably supports the first rotating shaft; a second bearing that is arranged on a second side in the axial direction relative to the first gear and the other first gears, and rotatably supports the first rotating shaft, wherein the second side in the axial direction is generally opposite to the first side in the axial direction; a third bearing that is arranged on the first side in the axial direction relative to the second gear and the other second gears, and rotatably supports the second rotating shaft; and a fourth bearing that is arranged on the second side in the axial direction relative to the second gear and the other second gears, and rotatably supports the second rotating shaft. The second-speed transmission gear pair is arranged farthest on the first side in the axial direction, and the first-speed transmission gear pair is arranged farthest on the second side in the axial direction.

The force to be applied between the first gear and the second gear decreases in the following order: first speed, second speed, third speed, fourth speed, fifth speed, and sixth speed. According to the embodiment described above, the first-speed and second-speed transmission gear pairs, where a large load is generated, are each arranged near a bearing. Therefore, it is possible to more stably support the first rotating shaft and the second rotating shaft. The rotation of the first rotating shaft and the second rotating shaft can be more stabilized. Therefore, the operation of the transmission can be more stabilized. It is possible to decrease the outer diameters of the first rotating shaft and the second rotating shaft, and it is possible to reduce the size and the weight of the transmission.

According to one preferred embodiment, the transmission includes: first-speed to sixth-speed transmission gear pairs having different gear ratios, wherein the first-speed to sixth-speed transmission gear pairs are the first gear, the second gear, the other first gears and the other second gears; a first bearing that is arranged on a first side in the axial direction relative to the first gear and the other first gears, and rotatably supports the first rotating shaft; a second bearing that is arranged on a second side in the axial direction relative to the first gear and the other first gears, and rotatably supports the first rotating shaft, wherein the second side in the axial direction is generally opposite to the first side in the axial direction; a third bearing that is arranged on the first side in the axial direction relative to the second gear and the other second gears, and rotatably supports the second rotating shaft; and a fourth bearing that is arranged on the second side in the axial direction relative to the second gear and the other second gears, and rotatably supports the second rotating shaft. The second-speed transmission gear pair is arranged farthest on the first side in the axial direction, and the first-speed transmission gear pair is arranged farthest on the second side in the axial direction.

According to the embodiment described above, since the first-speed and second-speed transmission gear pairs are each arranged near a bearing, it is possible to more stably support the first rotating shaft and the second rotating shaft. It is possible to stabilize the operation of the transmission and reduce the weight thereof. There is also an advantageous effect that for all of the first-speed to sixth-speed transmission gear pairs, it is possible to avoid complicating the machining process and avoid an increase of cost and it is possible to prevent the dogs from inadvertently coming off the engagement holes.

According to one preferred embodiment, the transmission includes: first-speed to sixth-speed transmission gear pairs having different gear ratios, wherein at least the third-speed to sixth-speed transmission gear pairs are the first gear, the second gear, the other first gears and the other second gears; a first bearing that is arranged on a first side in the axial direction relative to the first gear and the other first gears, and rotatably supports the first rotating shaft; a second bearing that is arranged on a second side in the axial direction relative to the first gear and the other first gears, and rotatably supports the first rotating shaft, wherein the second side in the axial direction is generally opposite to the first side in the axial direction; a third bearing that is arranged on the first side in the axial direction relative to the second gear and the other second gears, and rotatably supports the second rotating shaft; and a fourth bearing that is arranged on the second side in the axial direction relative to the second gear and the other second gears, and rotatably supports the second rotating shaft. The first-speed to sixth-speed transmission gear pairs are arranged in the following order, from the first side toward the second side in the axial direction: the second-speed transmission gear pair, the fourth-speed transmission gear pair, the sixth-speed transmission gear pair, the fifth-speed transmission gear pair, the third-speed transmission gear pair, and the first-speed transmission gear pair.

According to one preferred embodiment, the transmission includes: first-speed to sixth-speed transmission gear pairs having different gear ratios, wherein the first-speed to sixth-speed transmission gear pairs are the first gear, the second gear, the other first gears and the other second gears; a first bearing that is arranged on a first side in the axial direction relative to the first gear and the other first gears, and rotatably supports the first rotating shaft; a second bearing that is arranged on a second side in the axial direction relative to the first gear and the other first gears, and rotatably supports the first rotating shaft, wherein the second side in the axial direction is generally opposite to the first side in the axial direction; a third bearing that is arranged on the first side in the axial direction relative to the second gear and the other second gears, and rotatably supports the second rotating shaft; and a fourth bearing that is arranged on the second side in the axial direction relative to the second gear and the other second gears, and rotatably supports the second rotating shaft. The first-speed to sixth-speed transmission gear pairs are arranged in the following order, from the first side toward the second side in the axial direction: the second-speed transmission gear pair, the fourth-speed transmission gear pair, the sixth-speed transmission gear pair, the fifth-speed transmission gear pair, the third-speed transmission gear pair, and the first-speed transmission gear pair.

According to one preferred embodiment, inclination angles of the helical gears are set so that the inclination angle is smaller for a higher gear number.

According to one preferred embodiment, teeth of the helical gears are inclined by 5° to 30° relative to the axial direction.

According to the embodiment described above, by setting the inclination angles of the teeth to be 5° or more, it is possible to preferably prevent dogs from being inadvertently coming off. By setting the inclination angles of the teeth to be 30° or less, it is possible to prevent the load for pulling out the dogs from being excessive, and it is possible to ensure a desirable gear-shifting feel.

A vehicle disclosed herein includes: the transmission described above; a drive source that is linked to, and drives, one of the first rotating shaft and the second rotating shaft; a power transmitting member that is linked to the other one of the first rotating shaft and the second rotating shaft; and a driving wheel that is linked to the power transmitting member.

### ADVANTAGEOUS EFFECTS OF INVENTION

According to the present invention, it is possible to provide a transmission and a vehicle having the same, with which it is possible to prevent dogs from inadvertently coming off engagement holes while avoiding complicating the machining process and avoiding an increase of cost.

### BRIEF DESCRIPTION OF DRAWINGS

FIG. **1** is a side view of a motorcycle according to an embodiment.
FIG. **2** is a cross-sectional view of an internal combustion engine of the motorcycle.
FIG. **3** is a cross-sectional view of a part of a transmission.
FIG. **4a** is a front view of a drive gear, and FIG. **4b** is a cross-sectional view taken along line IVb-IVb of FIG. **4a****.**
FIG. **5a** is a front view of a driven gear, FIG. **5b** is a cross-sectional view taken along line Vb-Vb of FIG. **5a**, and FIG. **5c** is a cross-sectional view taken along line Vc-Vc of FIG. **5a****.**
FIG. **6a** is a front view of a slide ring, and FIG. **6b** is a cross-sectional view taken along line Vlb-Vlb of FIG. **6a****.**
FIG. **7a** is a front view of a collar, and FIG. **7b** is a cross-sectional view taken along line Vllb-Vllb of FIG. **7a****.**
FIG. **8** is a view of a slide ring and a driven gear as seen along the axial direction.
FIG. **9** is a front view of shift forks and a shift drum.
FIG. **10** is a front view of a part of a transmission.
FIG. **11** is a view of a slide ring and a driven gear according to a reference example as seen along the axial direction.
FIG. **12** is a graph showing the relationship between the dog position and the stress for a case where the slide ring of the embodiment is used and a case where the slide ring of the reference example is used.
FIG. **13** is a diagram schematically representing a configuration of a transmission according to a first embodiment.
FIG. **14** is a diagram schematically representing a configuration of a transmission according to a second embodiment.
FIG. **15** is a partial cross-sectional view of a conventional transmission in which a dog is inversely tapered.

### DESCRIPTION OF EMBODIMENTS

### (First embodiment)

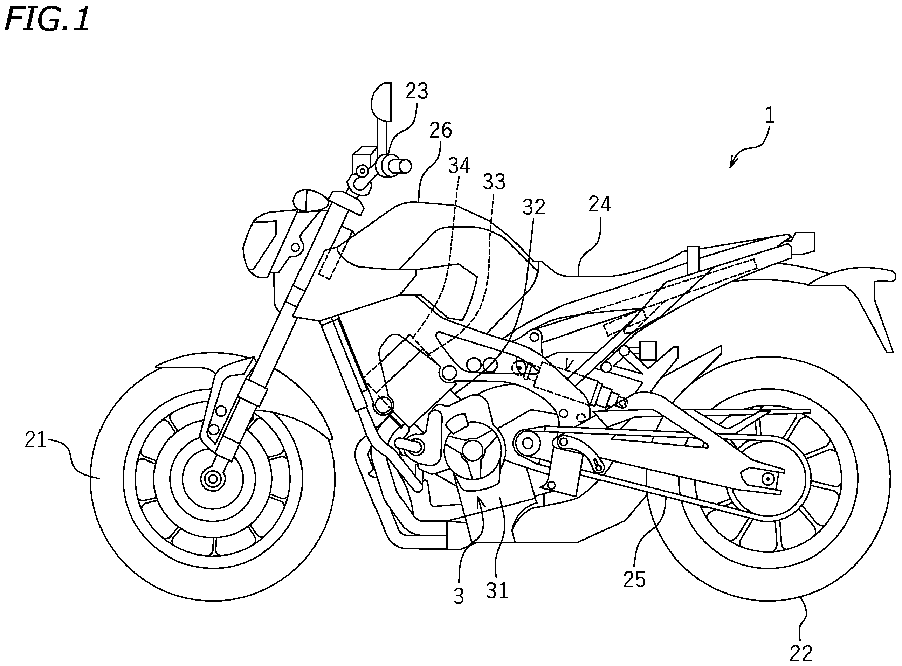

Embodiments will now be described with reference to the drawings. FIG. **1** is a side view of a motorcycle **1**, which is an example of the vehicle. The motorcycle **1** includes a front wheel **21**, a rear wheel **22**, an internal combustion engine (hereinafter "engine") **3**, a handle **23**, a fuel tank **26**, and a seat **24.** The engine **3** is linked to the rear wheel **22** by a power transmitting member such as a chain **25.** The rear wheel **22** is driven by the engine **3.** The engine **3** and the rear wheel **22** are an example of the "drive source" and an example of the "driving wheel", respectively.

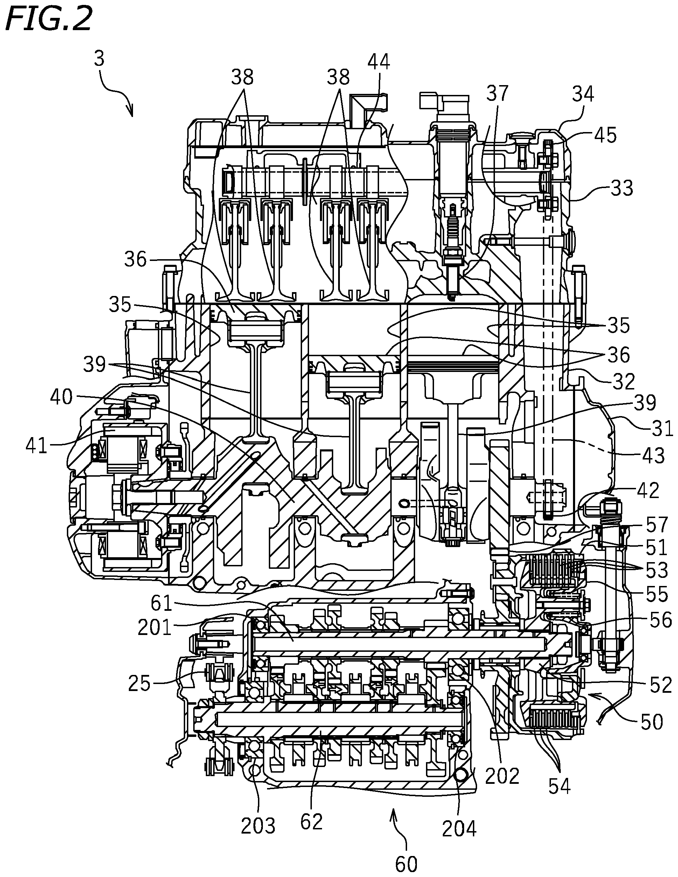

As shown in FIG. **2**, the engine **3** includes a crankcase **31**, a cylinder body **32** connected to the crankcase **31**, a cylinder head **33** connected to the cylinder body **32**, and a cylinder head cover **34** connected to the cylinder head **33.** The engine **3** is a multi-cylinder engine including a plurality of cylinders **35.** Herein, the engine **3** is a 3-cylinder engine. Note however that there is no limitation thereto. The engine **3** may be a single-cylinder engine including only one cylinder **35.** The engine **3** may be a water-cooled engine or may be an air-cooled engine.

The cylinder head **33** includes an ignitor **37**, an intake valve (not shown) and an exhaust valve **38.** The cylinders **35** are provided inside the cylinder body **32.** Pistons **36** are accommodated inside the cylinders **35.** The pistons **36** are linked to a crankshaft **40** via connecting rods **39.** The crankshaft **40** is arranged inside the crankcase **31.** The crankshaft **40** extends in the vehicle width direction. A generator **41** is attached to the left end portion of the crankshaft **40.** A sprocket **42** is attached to the right end portion of the crankshaft **40.** A cam chain **43** is wound around the sprocket **42.** Moreover, the cam chain **43** is wound around a sprocket **45** attached to a camshaft **44.**

The motorcycle **1** includes a clutch **50.** The clutch **50** is attached to a drive shaft **61.** Herein, the clutch **50** is attached to the right end portion of the drive shaft **61.** The clutch **50** includes a clutch housing **51** that is rotatably attached to the drive shaft **61**, a clutch boss **52** that is unrotatably attached to the drive shaft **61**, a plurality of first clutch plates **53** that are provided in the clutch housing **51**, and a plurality of second clutch plates **54** that are provided on the clutch boss **52.**

The first clutch plates **53** and the second clutch plates **54** are arranged alternating with each other in the axial direction of the drive shaft **61.** The first clutch plates **53** and the second clutch plates **54** oppose each other. A pressure plate **55** is arranged rightward of the first clutch plates **53** and the second clutch plates **54.** The pressure plate **55** is configured to be movable in the axial direction of the drive shaft **61** and is urged leftward by a spring **56.** The first clutch plates **53** and the second clutch plates **54** are in close contact with each other by being pressed by the pressure plate **55.** Thus, the clutch **50** is connected. When the pressure plate **55** is moved rightward, the first clutch plates **53** and the second clutch plates **54** move away from each other. Thus, the clutch **50** is disconnected.

The clutch housing **51** is in mesh with a gear **57** provided on the crankshaft **40.** The clutch housing **51** rotates together with the crankshaft **40.** When the clutch **50** is connected, the torque of the crankshaft **40** is transmitted to the drive shaft **61**, and the drive shaft **61** is driven by the crankshaft **40.** When the clutch **50** is disconnected, the transmission of the torque from the crankshaft **40** to the drive shaft **61** is cut off.

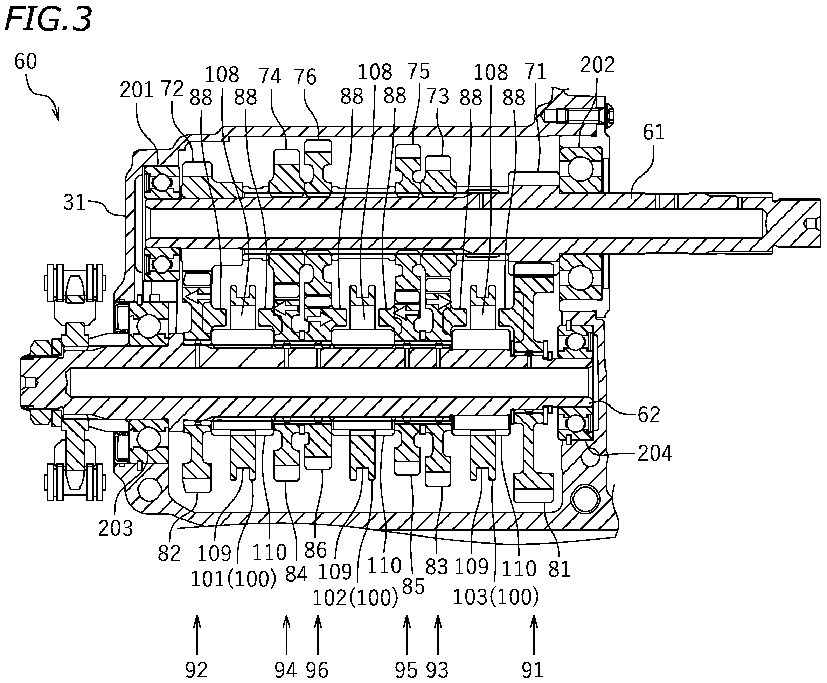

The motorcycle **1** includes a transmission **60.** As shown in FIG. 3, the transmission **60** includes the drive shaft **61**, a driven shaft **62**, a plurality of drive gears **71** to **76**, a plurality of driven gears **81** to **86**, and a plurality of slide rings **101** to **103.** In the present embodiment, the drive shaft **61** corresponds to the "first rotating shaft", and the driven shaft **62** corresponds to the "second rotating shaft". The drive gears **71** to **76** correspond to the "first gear", and the driven gears **81** to **86** correspond to the "second gear". The drive shaft **61** and the driven shaft **62** are arranged parallel to the crankshaft **40.** The drive shaft **61** and the driven shaft **62** are arranged parallel to each other.

The drive shaft **61** is rotatably supported by a first bearing **201** and a second bearing **202.** The driven shaft **62** is rotatably supported by a third bearing **203** and a fourth bearing **204.** The first to fourth bearings **201** to **204** are secured to the crankcase **31.**

In the present embodiment, the transmission **60** is a stepped transmission having six speeds. The transmission **60** includes the drive gears **71** to **76** for the first to sixth speeds. The drive gears **71** to **76** are attached to the drive shaft **61** so as to be unrotatable and axially unmovable relative to the drive shaft **61.** The drive gears **71** to **76** are configured so as to rotate together with the drive shaft **61.** The drive gears **71** to **76** are arranged between the first bearing **201** and the second bearing **202.** The diameters of the drive gears **71** to **76** increase in this order. That is, diameter of first-speed drive gear **71** < diameter of second-speed drive gear **72** < diameter of third-speed drive gear **73** < diameter of fourth-speed drive gear **74** < diameter of fifth-speed drive gear **75** < diameter of sixth-speed drive gear **76.**

The transmission **60** includes driven gears **81** to **86** for the first speed to the sixth speed. The driven gears **81** to **86** are attached to the driven shaft **62** so as to be rotatable and axially unmovable relative to the driven shaft **62.** The driven gears **81** to **86** are configured so that they can idle on the driven shaft **62.** The driven gears **81** to **86** are arranged between the third bearing **203** and the fourth bearing **204.** The diameters of the driven gears **81** to **86** decrease in this order. That is, diameter of first-speed driven gear **81** > diameter of second-speed driven gear **82** > diameter of third-speed driven gear **83** > diameter of fourth-speed driven gear **84** > diameter of fifth-speed driven gear **85** > diameter of sixth-speed driven gear **86.**

The drive gears **71** to **76** for the first speed to the sixth speed are in mesh with the driven gears **81** to **86** for the first speed to the sixth speed, respectively, thereby forming transmission gear pairs **91** to **96** for the first speed to the sixth speed, respectively. The reduction ratios of the transmission gear pairs **91** to **96** for the first speed to the sixth speed decrease in this order. That is, reduction ratio of first transmission gear pair **91** > reduction ratio of second transmission gear pair **92** > reduction ratio of third transmission gear pair **93** > reduction ratio of fourth transmission gear pair **94** > reduction ratio of fifth transmission gear pair **95** > reduction ratio of sixth transmission gear pair **96.** The transmission gear pairs **91** to **96** for the first speed to the sixth speed are arranged in the following order, from left to right: the second-speed transmission gear pair **92**, the fourth-speed transmission gear pair **94**, the sixth-speed transmission gear pair **96**, the fifth-speed transmission gear pair **95**, the third-speed transmission gear pair **93** and the first-speed transmission gear pair **91.**

The first to third slide rings **101** to **103** are attached to the driven shaft **62** so as to be unrotatable and axially movable relative to the driven shaft **62.** The first to third slide rings **101** to **103** are configured so as to rotate together with the driven shaft **62.** The first slide ring **101** is arranged between the second-speed driven gear **82** and the fourth-speed driven gear **84.** The second slide ring **102** is arranged between the sixth-speed driven gear **86** and the fifth-speed driven gear **85.** The third slide ring **103** is arranged between the third-speed driven gear **83** and the first-speed driven gear **81.**

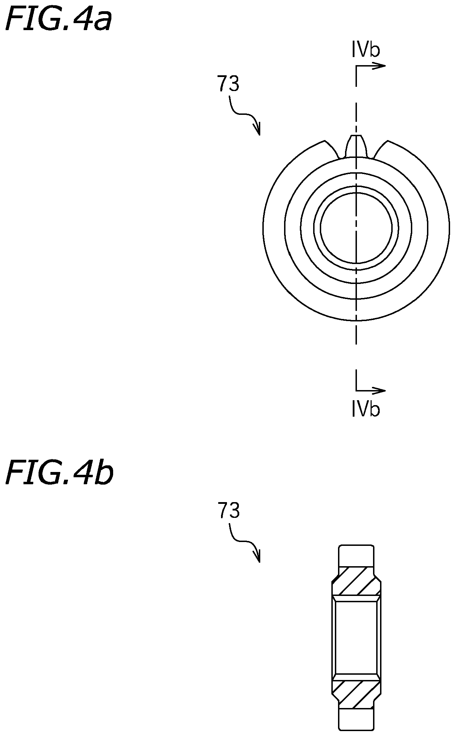

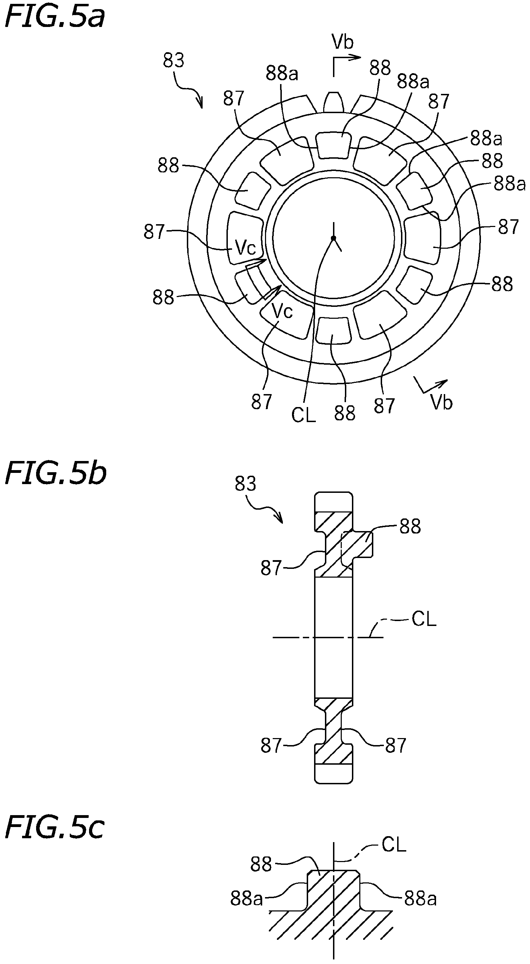

FIG. **4a** is a front view (as seen from the right side of FIG. 3) of the third-speed drive gear **73**, and FIG. **4b** is a cross-sectional view of the third-speed drive gear **73.** FIG. **5a** is a front view (as seen from the right side of FIG. **3**) of the third-speed driven gear **83.** FIG. **5b** is a cross-sectional view taken along line Vb-Vb of FIG. **5a**, and FIG. **5c** is a cross-sectional view taken along line Vc-Vc of FIG. **5a****.** While the drive gear **73** does not include dogs, the driven gear **83** includes dogs **88** protruding in the axial direction (see FIG. **5b**). As shown in FIG. **5a**, the driven gear **83** includes six dogs **88.** These dogs **88** are arranged equidistantly in the circumferential direction. Note that the circumferential direction as used herein refers to the circumferential direction of the driven shaft **62.** The dogs **88** are arranged 60° apart from each other. The dogs **88** each have side surfaces **88a.** The side surfaces **88a** are surfaces that crosses the circumferential direction, and the side surfaces **88a** herein extend in the radial direction. Note that the radial direction as used herein refers to the radial direction of the driven shaft **62.** In FIG. **5a** and FIG. **5c**, designation **CL** represents the axial line. As shown in FIG. **5a** and FIG. **5c**, the side surfaces **88a** of the dogs **88** extend straight in the axial direction (in other words, the direction perpendicular to the sheet of FIG. **5a**). The dogs **88** are not inversely tapered. Indentations **87** are formed between dogs **88** adjacent to each other in the circumferential direction. As shown in FIG. **5b**, indentations **87** are formed also on the reverse side of the dogs **88.** These indentation **87** are formed for the purpose of reducing the weight of the driven gear **83.** Note however that the indentations **87** are not always necessary and may be omitted.

Similarly, the other drive gears **71**, **72**, **74**, **75** and **76** do not include dogs, and the other driven gears **81**, **82**, **84**, **85** and **86** include the dogs **88** (see FIG. **3**). The dogs **88** provided on the driven gears **81** to **86** protrude toward the slide rings **101** to **103.**

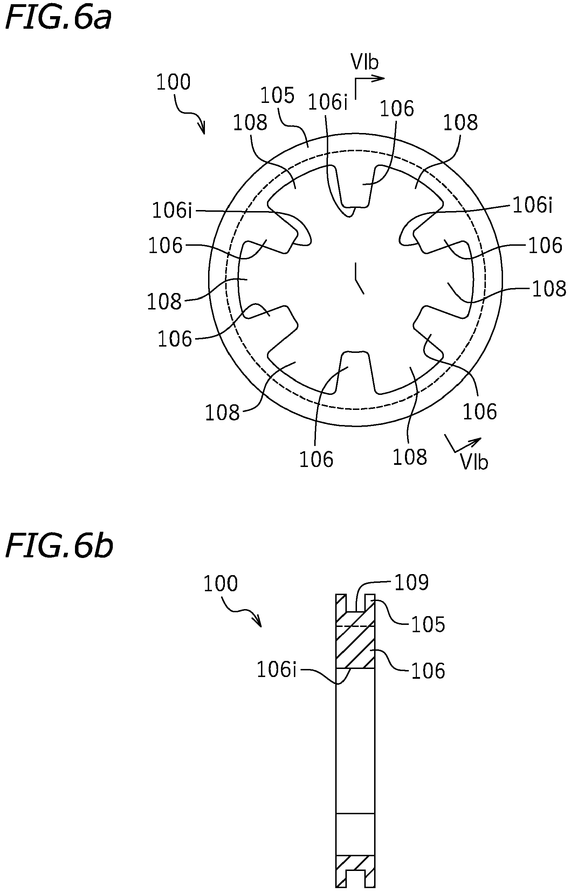

While the configurations of the first to third slide rings **101** to **103** may be different from each other, the first to third slide rings **101** to **103** herein have the same configuration. The first to third slide rings **101** to **103** are each a slide ring **100** shown in FIG. **6a** and FIG. **6b****.** Next, the configuration of the slide ring **100** will be described.

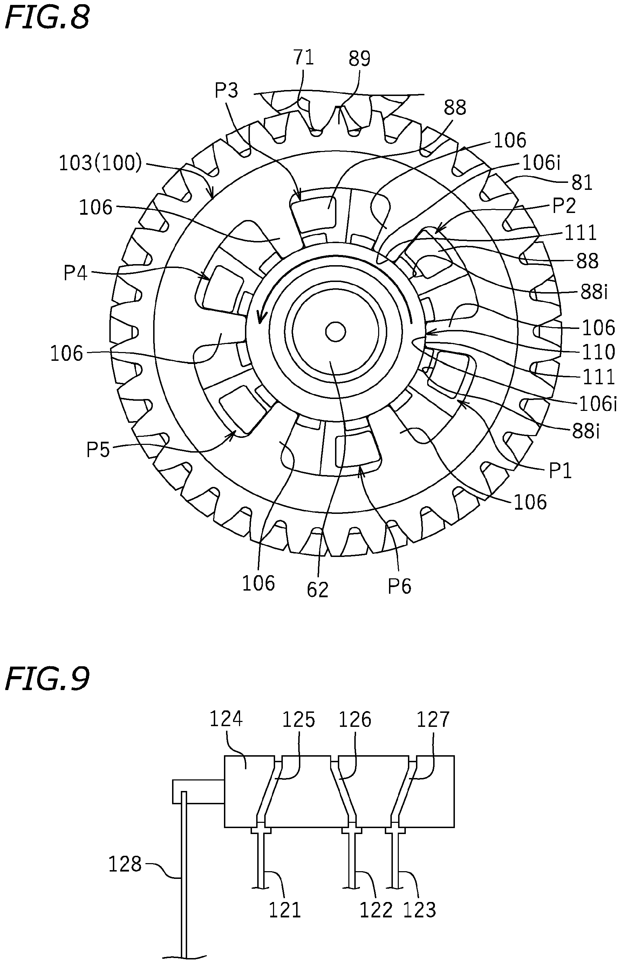

FIG. **6a** is a front view of the slide ring **100**, and FIG. **6b** is a cross-sectional view of the slide ring **100.** As shown in FIG. **6a**, the slide ring **100** includes an annular portion **105** concentric with the driven shaft **62**, and a plurality of protruding portions **106** extending radially inward from the annular portion **105.** The protruding portions **106** are arranged next to each other in the circumferential direction. In the present embodiment, six protruding portions **106** are arranged equidistantly in the circumferential direction. The protruding portions **106** are arranged 60° apart from each other. The slide ring **100** includes engagement holes **108**, defined by the annular portion **105** and the protruding portions **106**, into which the dogs **88** are inserted. Herein, the slide ring **100** includes six engagement holes **108.** The radially outward end of the engagement holes **108** is delimited by the annular portion **105.** The opposing ends of the engagement holes **108** in the circumferential direction are delimited by protruding portions **106.** The radially inward end of the engagement holes **108** is open. The radially inner end **106i** of the protruding portions **106** of the slide ring **100** is located radially inward relative to the radially inner end **88i** of the dogs **88** of the driven gears **81** to **86** (see FIG. **8**). The protruding portions **106** of the slide ring **100** are formed so that the dimension thereof in the circumferential direction decreases while extending radially inward.

As shown in FIG. **6b**, a groove **109** is formed on the outer circumferential surface of the slide ring **100.** The groove **109** is depressed radially inward and extends in the circumferential direction.

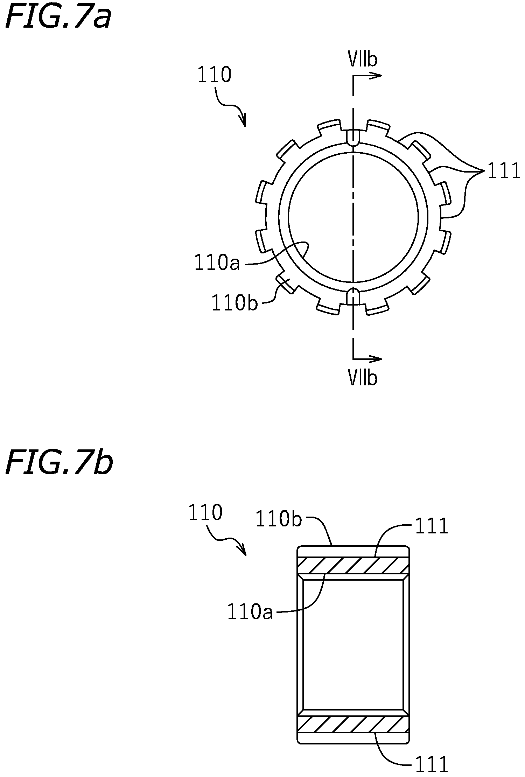

As shown in FIG. **3**, a cylindrical collar **110** is interposed between the slide ring **100** and the driven shaft **62.** The slide ring **100** is attached to the driven shaft **62** with the collar **110** therebetween. FIG. **7a** is a front view of the collar **110**, and FIG. **7b** is a cross-sectional view of the collar **110.** The collar **110** includes an inner circumferential portion **110a**, which engages with the driven shaft **62** so as to be unrotatable and axially unmovable relative to the driven shaft **62**, and an outer circumferential portion **110b** including a plurality of depressed portions **111** formed thereon.

As shown in FIG. **8**, the distal end portion of the protruding portion **106** of the slide ring **100** is inserted into the depressed portion **111** of the collar **110.** The protruding portion **106** engages with the outer circumferential portion **110b** of the collar **110.** The slide ring **100** engages with the collar **110** so as to be axially slidable and circumferentially unslidable relative to the collar **110.** The collar **110** is secured to the driven shaft **62** so as to rotate together with the driven shaft **62.** Therefore, the slide ring **100** rotates together with the driven shaft **62** and the collar **110.** Note that while the protruding portion **106** of the slide ring **100** engages with the depressed portion **111** of the collar **110**, the protruding portion **106** can slightly bend in the circumferential direction. The protruding portion **106** of the slide ring **100** and the depressed portion **111** of the collar **110** engage with each other so as to allow bending deformation of the protruding portion **106** in the circumferential direction.

As shown in FIG. **9**, the transmission **60** includes a first shift fork **121**, a second shift fork **122**, a third shift fork **123** and a shift drum **124.** The shift drum **124** includes a first guide groove **125**, a second guide groove **126** and a third guide groove **127.** The proximal end portions of the first to third shift forks **121** to **123** engage with the first to third guide grooves **125** to **127**, respectively. Although not shown in the figure, the distal end portion of the first shift fork **121** engages with the groove **109** of the first slide ring **101**, the distal end portion of the second shift fork **122** engages with the groove **109** of the second slide ring **102**, and the distal end portion of the third shift fork **123** engages with the groove **109** of the third slide ring **103.** A rod **128** for rotating the shift drum **124** is linked to the shift drum **124.** As the shift drum **124** rotates, the first to third shift forks **121** to **123** move left and right along the first to third guide grooves **125** to **127.** Together with this, the first to third slide rings **101** to **103** in engagement with the first to third shift forks **121** to **123** move left and right.

As shown in FIG. **3**, the third slide ring **103** is arranged leftward of the first-speed driven gear **81.** When the third slide ring **103** moves rightward, the dogs **88** of the driven gear **81** are inserted into the engagement holes **108** of the third slide ring **103.** The driven gear **81** is always rotating since it is in mesh with the drive gear **71.** Therefore, as shown in FIG. **8**, the dogs **88** revolve around the center of the driven shaft **62**, and are in contact with the protruding portions **106** of the third slide ring **103.** As the protruding portions **106** are pushed by the dogs **88**, power is transmitted from the driven gear **81** to the third slide ring **103**, and the third slide ring **103** rotates together with the driven gear **81.** As the dogs **88** engage with the engagement holes **108**, power is transmitted from the drive shaft **61** to the driven shaft **62** via the first-speed transmission gear pair **91**, thus driving the driven shaft **62.**

This similarly applies to the second-speed to sixth-speed transmission gear pairs **92** to **96.** That is, as the first slide ring **101** moves leftward, the dogs **88** of the second-speed driven gear **82** are inserted into the engagement holes **108** of the first slide ring **101.** Thus, power is transmitted from the drive shaft **61** to the driven shaft **62** via the second-speed transmission gear pair **92.** That is, as the third slide ring **103** moves leftward, the dogs **88** of the third-speed driven gear **83** are inserted into the engagement holes **108** of the third slide ring **103.** Thus, power is transmitted from the drive shaft **61** to the driven shaft **62** via the third-speed transmission gear pair **93.** As the first slide ring **101** moves rightward, the dogs **88** of the fourth-speed driven gear **84** are inserted into the engagement holes **108** of the first slide ring **101.** Thus, power is transmitted from the drive shaft **61** to the driven shaft **62** via the fourth-speed transmission gear pair **94.** As the second slide ring **102** moves rightward, the dogs **88** of the fifth-speed driven gear **85** are inserted into the engagement holes **108** of the second slide ring **102.** Thus, power is transmitted from the drive shaft **61** to the driven shaft **62** via the fifth-speed transmission gear pair **95.** As the second slide ring **102** moves leftward, the dogs **88** of the sixth-speed driven gear **86** are inserted into the engagement holes **108** of the second slide ring **102.** Thus, power is transmitted from the drive shaft **61** to the driven shaft **62** via the sixth-speed transmission gear pair **96.**

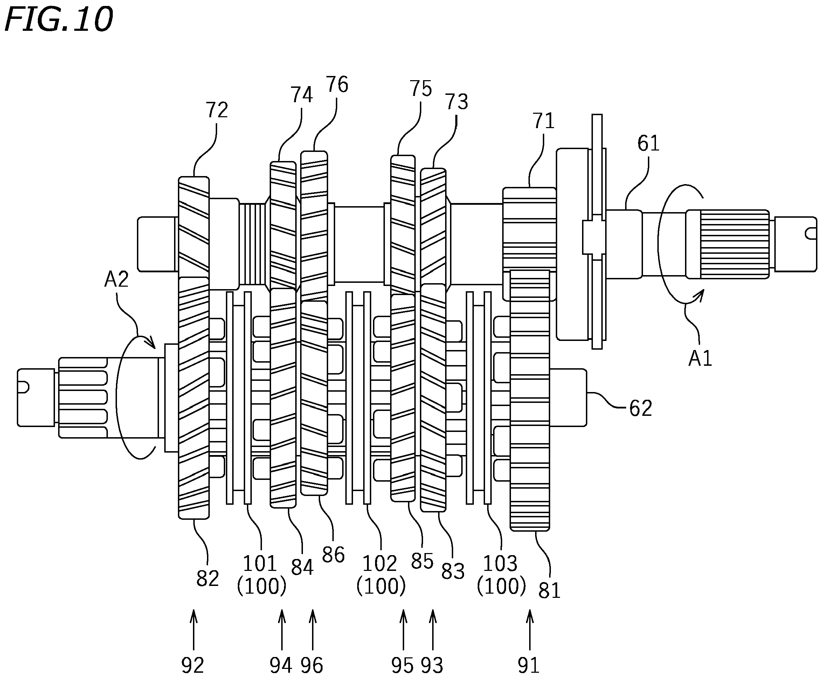

As shown in FIG. **10**, the drive gear **71** and the driven gear **81** for the first speed are spur gears. The drive gears **72** to **76** and the driven gears **82** to **86** for the second speed to the sixth speed are helical gears. A spur gear is a gear including a plurality of teeth that are parallel to the axial direction. On the other hand, a helical gear is a gear including a plurality of teeth that are inclined relative to the axial direction.

Hereinafter, the inclination of the teeth relative to the axial direction will be referred to as the inclination angle of the helical gear. While there is no particular limitation to the inclination angle of the helical gear, it is set in the range of 5° to 30° in the present embodiment. Herein, the inclination angles of the helical gears are set so that the inclination angle is smaller for a higher gear number. Herein, the inclination angles of the second-speed to sixth-speed drive gears **72** to **76** decrease in this order. That is, inclination angle of second-speed drive gear **72** > inclination angle of third-speed drive gear **73** > inclination angle of fourth-speed drive gear **74** > inclination angle of fifth-speed drive gear **75** > inclination angle of sixth-speed drive gear **76.** The inclination angles of the second-speed to sixth-speed driven gears **82** to **86** decrease in this order. That is, inclination angle of second-speed driven gear **82** > inclination angle of third-speed driven gear **83** > inclination angle of fourth-speed driven gear **84** > inclination angle of fifth-speed driven gear **85** > inclination angle of sixth-speed driven gear **86.** Note however that there is no particular limitation on the order of inclination angle between the drive gears **72** to **76** and the order of inclination angle between the driven gears **82** to **86.**

Typically, a helical gear has a higher mechanical strength than a spur gear. A helical gear can be made with a smaller face width than a spur gear. Note that the face width of a gear refers to the thickness of the gear, i.e., the dimension of the gear in the axial direction. In the present embodiment, as shown in FIG. **10**, the face width of the second-speed to sixth-speed drive gears **72** to **76** is smaller than the face width of the first-speed drive gear **71.** The face width of the second-speed to sixth-speed driven gears **82** to **86** is smaller than the face width of the first-speed driven gear **81.**

Since the teeth of helical gears are inclined from the axial direction, a helical gear receives a force in the rotation direction and a force in the axial direction at the same time from another, meshing helical gear. Thus, the second-speed to sixth-speed driven gears **82** to **86** receive a force in the rotation direction and a force in the axial direction from the second-speed to sixth-speed drive gears **72** to **76**, respectively.

In FIG. **10**, the drive shaft **61** rotates in the direction of arrow **A1**, and the driven shaft **62** rotates in the direction of arrow **A2.** In FIG. **10**, the rotation direction **A1** of the drive gears **71** to **76** is downward, and the rotation direction **A2** of the driven gears **81** to **86** is upward. The teeth of the third-speed drive gear **73** are inclined from the axial direction so as to extend leftward while extending downward in FIG. **10****.** The teeth of the third-speed driven gear **83** are inclined from the axial direction so as to extend leftward while extending upward in FIG. **10****.** That is, the teeth of the third-speed drive gear **73** are inclined from the axial direction so as to extend toward the opposite side from the third slide ring **103** while extending toward the rotation direction **A1**, and the teeth of the third-speed driven gear **83** are inclined from the axial direction so as to extend toward the opposite side from the third slide ring **103** while extending toward the rotation direction **A2.** The third-speed drive gear **73** and the driven gear **83** are configured so that the driven gear **83** receives, from the drive gear **73**, a thrust force in the direction toward the third slide ring **103.** When the dogs **88** of the third-speed driven gear **83** are in engagement with the engagement holes **108** of the third slide ring **103**, the driven gear **83** is pushed by the drive gear **73** toward the third slide ring **103**, thereby preventing the dogs **88** from inadvertently coming off the engagement holes **108.**

The teeth of the fourth-speed drive gear **74** are inclined from the axial direction so as to extend toward the opposite side from the first slide ring **101** while extending toward the rotation direction **A1**, and the teeth of the fourth-speed driven gear **84** are inclined from the axial direction so as to extend toward the opposite side from the first slide ring **101** while extending toward the rotation direction **A2.** The fourth-speed drive gear **74** and the driven gear **84** are configured so that the driven gear **84** receives, from the drive gear **74**, a thrust force in the direction toward the first slide ring **101.** When the dogs **88** of the fourth-speed driven gear **84** are in engagement with the engagement holes **108** of the first slide ring **101**, the driven gear **84** is pushed by the drive gear **74** toward the first slide ring **101**, thereby preventing the dogs **88** from inadvertently coming off the engagement holes **108.**

The teeth of the fifth-speed drive gear **75** are inclined from the axial direction so as to extend toward the opposite side from the second slide ring **102** while extending toward the rotation direction **A1**, and the teeth of the fifth-speed driven gear **85** are inclined from the axial direction so as to extend toward the opposite side from the second slide ring **102** while extending toward the rotation direction **A2.** The fifth-speed drive gear **75** and the driven gear **85** are configured so that the driven gear **85** receives, from the drive gear **75**, a thrust force in the direction toward the second slide ring **102.** When the dogs **88** of the fifth-speed driven gear **85** are in engagement with the engagement holes **108** of the second slide ring **102**, the driven gear **85** is pushed by the drive gear **75** toward the second slide ring **102**, thereby preventing the dogs **88** from inadvertently coming off the engagement holes **108.**

The teeth of the sixth-speed drive gear **76** are inclined from the axial direction so as to extend toward the opposite side from the second slide ring **102** while extending toward the rotation direction **A1**, and the teeth of the sixth-speed driven gear **86** are inclined from the axial direction so as to extend toward the opposite side from the second slide ring **102** while extending toward the rotation direction **A2.** The sixth-speed drive gear **76** and the driven gear **86** are configured so that the driven gear **86** receives, from the drive gear **76**, a thrust force in the direction toward the second slide ring **102.** When the dogs **88** of the sixth-speed driven gear **86** are in engagement with the engagement holes **108** of the second slide ring **102**, the driven gear **86** is pushed by the drive gear **76** toward the second slide ring **102**, thereby preventing the dogs **88** from inadvertently coming off the engagement holes **108.**

The second-speed drive gear **72** is press-fit to the drive shaft **61.** The drive gear **72** and the driven gear **82** are an example of the "first press-fit gear" and the "second mesh gear", respectively. The teeth of the second-speed drive gear **72** are inclined from the axial direction toward the first slide ring **101** (herein, the right side) while extending toward the rotation direction **A1**, and the teeth of the second-speed driven gear **82** are inclined from the axial direction toward the first slide ring **101** (herein, the right side) while extending toward the rotation direction **A2.** The drive gear **72** gives a leftward force to the driven gear **82**, and receives a rightward force from the driven gear **82** as a reaction force. The drive gear **72** and the driven gear **82** for the second speed are configured so that the drive gear **72** receives a rightward thrust force from the driven gear **82.** This prevents the drive gear **72**, which is press-fit to the drive shaft **61**, from shifting toward the first bearing **201** (see FIG. **3**), thereby preventing a large thrust load from being applied to the first bearing **201.**

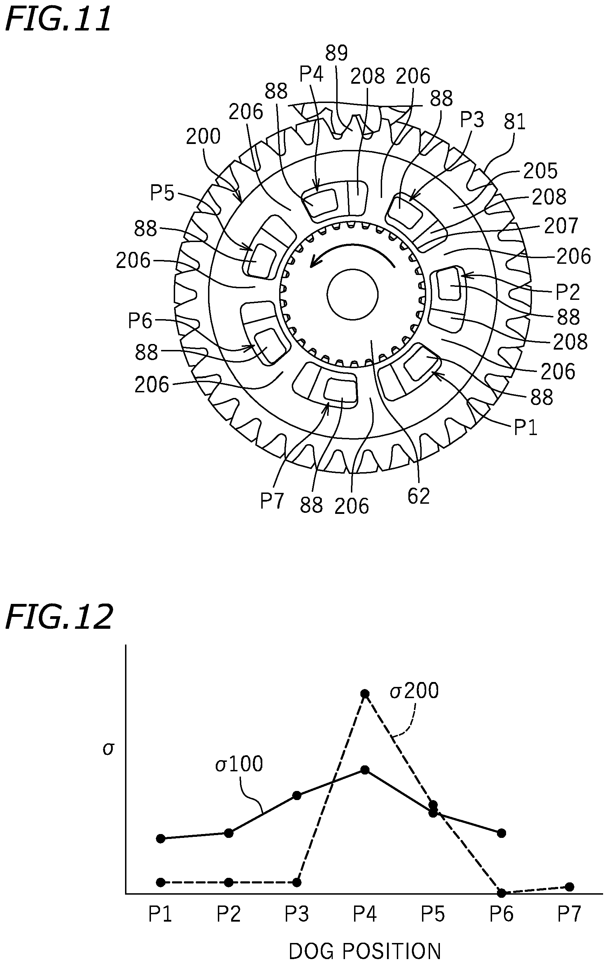

While each of the first to third slide rings **101** to **103** is the slide ring **100** (see FIG. **6a**), it may be a slide ring **200** as shown in FIG. **11**, instead of the slide ring **100.** The slide ring **200** includes an annular portion **205** and a plurality of protruding portions **206** extending radially inward from the annular portion **205**, and further includes an inner ring portion **207.** The distal end portion of each protruding portion **206** is connected to the inner ring portion **207.** Engagement holes **208** are defined by the annular portion **205**, the inner ring portion **207** and the protruding portions **206.** The distal end portions of the protruding portions **206** are linked together by the inner ring portion **207.** With the slide ring **200**, the distal end portions of the protruding portions **206** are restrained by the inner ring portion **207**, thereby restricting the bending of the protruding portions **206** in the circumferential direction.

While the dogs **88** are arranged around the center of each of the driven gears **81** to **86**, the center of arrangement of the dogs **88** and the center of the driven gear may be misaligned with each other due to variations in machining precision, etc. Hereinafter, such a misalignment will be referred to as an axial misalignment. Herein, when a torque is transmitted from the driven gear **81** to the slide ring **200**, for example, the torque is distributed among the six protruding portions **206** of the slide ring **200.** However, when there is an axial misalignment, the load varies between the protruding portions **206** so that some protruding portions **206** receive a larger load than other protruding portions **206.** This increases the maximum load to be instantaneously received by a protruding portion **206**, and there is a need to increase the rigidity of the slide ring **200** in advance. Therefore, the size and the weight of the slide ring **200** increase.

The present inventor conducted an experiment of measuring stresses on the proximal portions of the dogs **88** for the slide ring **200** including the inner ring portion **207** and for the slide ring **100** of the present embodiment. Specifically, the present inventor conducted an experiment of measuring stresses on the dogs **88** located at the first position **P1** to the seventh position **P7** using the slide ring **200** as shown in FIG. **11****.** The present inventor also conducted an experiment of measuring stresses on the dogs **88** located at the first position **P1** to the seventh position **P6** using the slide ring **100** as shown in FIG. **8****.** In these experiments, a driven gear with an axial misalignment was used. Note that as the driven gear rotates, the dogs **88** revolve around the center, and the positions of the dogs **88** change over time.

FIG. **12** shows a distribution o100 of stresses σ on the dogs **88** located at the first to sixth positions **P1** to **P6** for the slide ring **100**, and a distribution σ200 of stresses σ on the dogs **88** located at the first to seventh positions **P1** to **P7** for the slide ring **200.** As shown in FIG. **12**, it was found that when using the slide ring **200**, stresses σ on the dogs **88** vary significantly, with a very high stress σ on the dog **88** at the fourth position **P4.** Note that the fourth position **P4** is a position that is on the rotation direction side of the meshing portion **89** between the drive gear and the driven gear, and is a position that is closest to the meshing portion. In contrast, it was found that when using the slide ring **100**, stresses σ on the dogs **88** do not vary significantly, with the maximum value of the stress σ on the dog **88** being reduced.

With the slide ring **100** according to the present embodiment, the distal end portions of the protruding portions **106** are not linked together, and the protruding portions **106** can bend in the circumferential direction. It is presumed that when there is a high stress on the dog **88** at the fourth position **P4**, the protruding portion **106** in contact with the dog **88** at the fourth position **P4** bends in the circumferential direction, thereby reducing the load on this protruding portion **106** while increasing the load on the other protruding portions **106.** Thus, the load is distributed among the protruding portions **106**, and becomes relatively uniform. Thus, the maximum load on the protruding portion **106** is reduced. With the slide ring **100**, there is no need to configure the protruding portions **106** so as to be able to withstand a large load as compared with conventional techniques. Thus, it is possible to reduce the size and the weight of the slide ring **100.**

As described above, according to the present embodiment, the drive gears **73** to **76** and the driven gears **83** to **86** for the third speed to the sixth speed are helical gears. The transmission **60** is configured so that the driven gears **83**, **84**, **85** and **86** receive a thrust force toward the slide rings **103**, **101**, **102** and **102** from the drive gears **73**, **74**, **75** and **76**, respectively. Therefore, the dogs **88** provided on the driven gears **83** to **86** are unlikely to come off the engagement holes **108** formed in the slide rings **101** to **103.** Even if the dogs **88** are not inversely tapered, the dogs **88** are prevented from inadvertently coming off the engagement holes **108.**

With the transmission **60** according to the present embodiment, the dogs **88** are not provided on the drive gears **71** to **76.** Therefore, machining of the drive gears **71** to **76** is easy. While the dogs **88** are provided on the driven gears **81** to **86**, contact surfaces **88a** of the dogs **88** extend straight in the axial direction (see FIG. **5a** and FIG. **5c**). The dogs **88** are not inversely tapered. Therefore, machining of the dogs **88** is easy. According to the present embodiment, it is possible to avoid complicating the machining process and avoid an increase of cost for the dogs **88** and the driven gears **81** to **86.**

When shifting gears, there may be cases where the clutch **50** is not completely disconnected due to an influence of oil, or the like, that is present between the first clutch plates **53** and the second clutch plates **54.** That is, even though the first clutch plates **53** and the second clutch plates **54** are spaced away from each other, the second clutch plates **54** may rotate together with the rotation of the first clutch plates **53.** Then, the dogs **88** are pressed against the protruding portions **106** of the slide ring **100**, thereby increasing the load (i.e., the shift load) needed to pull the dogs **88** out of the engagement holes **108.** Herein, when the dogs **88** are inversely tapered, the shift load further increases, thereby deteriorating the gear-shifting feel. However, according to the present embodiment, since the contact surfaces **88a** of the dogs **88** extend straight in the axial direction, when pulling the dogs **88** out of the engagement holes **108**, the contact surfaces **88a** of the dogs **88** smoothly slide on the side surfaces of the protruding portions **106** (in other words, the edge portions of the engagement holes **108**). Therefore, it is possible to realize a good gear-shifting feel.

As described above, helical gears can be made thinner than spur gears. In the present embodiment, since the drive gears **72** to **76** and the driven gears **82** to **86** for the second speed to the sixth speed are helical gears, it is possible to reduce the size in the left-right direction of the transmission **60.**

Now, although the dogs **88** may be provided on the slide ring **100** and the engagement holes **108** may be formed on the driven gears **81** to **86**, gears with holes formed therein will have a lower mechanical strength than gears with no holes formed therein. The driven gears **81** to **86** are gears that mesh with the drive gears **71** to **76**, and they need to have a sufficient mechanical strength. When the engagement holes **108** are formed in the driven gears **81** to **86**, there is a need to increase the size and the weight of the driven gears **81** to **86** in order to ensure a sufficient mechanical strength. On the other hand, in the present embodiment, the dogs **88** are provided on the driven gears **81** to **86**, and the engagement holes **108** are formed in the slide ring **100.** Therefore, it is possible to ensure a sufficient mechanical strength of the driven gears **81** to **86** without increasing the size and the weight. According to the present embodiment, it is possible to reduce the size and the weight of the driven gears **81** to **86.** Thus, it is possible to reduce the size and the weight of the transmission **60.**

While the transmission **60** includes the first to third slide rings **101** to **103**, all of the slide rings **101** to **103** are attached to the driven shaft **62.** All of the slide rings **101** to **103** are attached to the same shaft. Where one or more of the slide rings **101** to **103** are attached to the drive shaft **61**, with the remainder attached to the driven shaft **62**, it is likely to increase the size of, and complicate the configuration of, the shift forks **121** to **123** and the shift drum **124.** In contrast, according to the present embodiment, since all of the slide rings **101** to **103** are attached to the driven shaft **62**, it is possible to simplify the configuration of, and reduce the size of, the shift forks **121** to **123** and the shift drum **124.**

With the transmission **60**, deceleration is done when power is transmitted from the drive gears **71** to **76** to the driven gears **81** to **86.** The diameters of the driven gears **81** to **86** are larger than the diameters of the drive gears **71** to **76.** It is easier to ensure spaces for the provision of the dogs **88** in the driven gears **81** to **86** than in the drive gears **71** to **76.** In the present embodiment, the dogs **88** are provided on the driven gears **81** to **86.** Therefore, it is easy to provide the dogs **88.** Since the diameters of the driven gears **81** to **86** are larger than the diameters of the drive gears **71** to **76**, the dogs **88** can be arranged at positions that are farther away from the center of rotation. This makes it easier to perform the operation of inserting the dogs **88** into the engagement holes **108** and the operation of pulling the dogs **88** out of the engagement holes **108.** Thus, it is possible to realize an even better gear-shifting feel.

In the present embodiment, since the drive gear **72** is press-fit to the drive shaft **61**, when the drive gear **72** receives a leftward large force, the drive gear **72** may move leftward to contact with the first bearing **201.** However, the drive gear **72** and the driven gear **82** are configured so that the drive gear **72** receives, from the driven gear **82**, a thrust force in the direction away from the first bearing **201.** This suppresses the leftward movement of the drive gear **72.** Therefore, it is possible to prevent contact between the drive gear **72** and the first bearing **201.**

The force generated between a drive gear and a driven gear decreases in the following order: first speed, second speed, third speed, fourth speed, fifth speed, and sixth speed. The first-speed to second-speed transmission gear pairs **91** to **92** receive a larger force than the third-speed to sixth-speed transmission gear pairs **93** to **96.** In the present embodiment, of the transmission gear pairs **91** to **96** for the first speed to the sixth speed, the second-speed transmission gear pair **92** is arranged farthest on the left side, and the first-speed transmission gear pair **91** is arranged farthest on the right side. The second-speed drive gear **72** is arranged in the vicinity of the first bearing **201**, and the first-speed drive gear **71** is arranged in the vicinity of the second bearing **202.** The second-speed driven gear **82** is arranged in the vicinity of the third bearing **203**, and the first-speed driven gear **81** is arranged in the vicinity of the fourth bearing **204.** Therefore, it is possible to more stably support the drive shaft **61** and the driven shaft **62.** The rotation of the drive shaft **61** and the driven shaft **62** can be more stabilized. Therefore, the operation of the transmission **60** can be more stabilized. It is possible to decrease the outer diameters of the drive shaft **61** and the driven shaft **62.** It is possible to reduce the size and the weight of the transmission **60.**

In the present embodiment, the transmission gear pairs **91** to **96** for the first speed to the sixth speed are arranged in the following order, from left to right: the second-speed transmission gear pair **92**, the fourth-speed transmission gear pair **94**, the sixth-speed transmission gear pair **96**, the fifth-speed transmission gear pair **95**, the third-speed transmission gear pair **93**, and the first-speed transmission gear pair **91.** Therefore, it is possible to even more stably support the drive shaft **61** and the driven shaft **62**, and the operation of the transmission **60** can be even more stabilized. It is possible to further reduce the size and the weight of the transmission **60.**

As described above, in the present embodiment, the drive gears **73** to **76** and the driven gears **83** to **86** for the third speed to the sixth speed are helical gears whose inclination angles are 5° to 30°. By setting the inclination angles to be 5° or more, the driven gears **83** to **86** can be sufficiently pressed against the slide rings **101** to **103**, and it is possible to preferably prevent dogs from being inadvertently coming off. By setting the inclination angles to be 30° or less, it is possible to prevent the shift load for pulling out the dogs **88** from being excessive. Thus, it is possible to ensure a desirable gear-shifting feel.

While a transmission and a vehicle according to one embodiment have been described above, the embodiment described above is merely an example, and various other embodiments are possible. Next, other example embodiments will be described briefly.

### (Second embodiment)

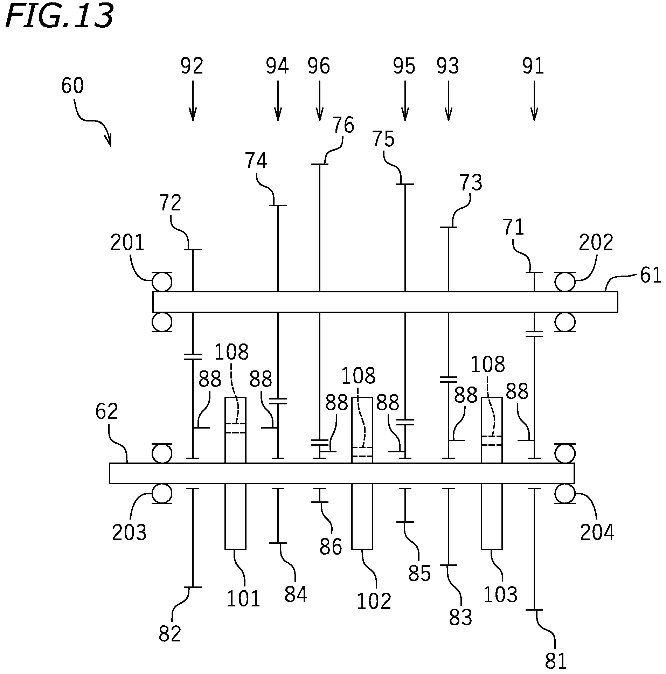

FIG. **13** is a diagram schematically representing a portion of the transmission **60** according to the embodiment described above. As shown in FIG. **13**, in the embodiment described above, the first to third slide rings **101** to **103** are attached to the driven shaft **62.** No slide ring is attached to the drive shaft **61.** The drive shaft **61**, the driven shaft **62**, the drive gears **71** to **76** and the driven gears **81** to **86** correspond to the "first rotating shaft", the "second rotating shaft", the "first gear" and the "second gear", respectively.

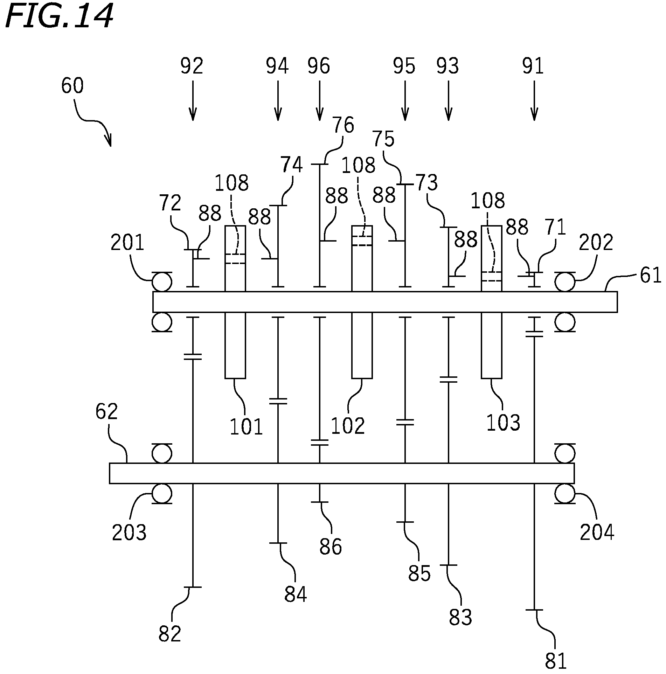

In the embodiment shown in FIG. **14**, the first to third slide rings **101** to **103** are attached to the drive shaft **61**, and no slide ring is attached to the driven shaft **62.** In the present embodiment, the drive gears **71** to **76** are attached to the drive shaft **61** so as to be rotatable and axially unmovable relative to the drive shaft **61.** The driven gears **81** to **86** are attached to the driven shaft **62** so as to be unrotatable and axially unmovable relative to the driven shaft **62.** The first to third slide rings **101** to **103** are attached to the drive shaft **61** so as to be unrotatable and axially movable relative to the drive shaft **61.** In the present embodiment, the driven shaft **62** and the drive shaft **61** correspond to the "first rotating shaft" and the "second rotating shaft", respectively. The driven gears **81** to **86** correspond to the "first gear", and the drive gears **71** to **76** correspond to the "second gear". In the present embodiment, power is transmitted in the following order: the drive shaft **61**, the slide rings **101** to **103**, the drive gears **71** to **76**, the driven gears **81** to **86**, and the driven shaft **62.** For example, when the gear position is at the first speed, the dogs **88** of the first-speed drive gear **71** engage with the engagement holes **108** of the third slide ring **103.** Then, power is transmitted in the following order: the drive shaft **61**, the third slide ring **103**, the first-speed drive gear **71**, the first-speed driven gear **81**, and the driven shaft **62.**

In the first embodiment, since power is transmitted from the driven gear to the slide ring **100**, as shown in FIG. **8**, the dogs **88** push the protruding portions **106** of the slide ring **100.** Therefore, the side surface **88a** of each dog **88** on the rotation direction side is the contact surface at which the dog **88** contacts with the protruding portion **106** of the slide ring **100.** On the other hand, in the present embodiment, since power is transmitted from the slide ring **100** to the drive gear, the protruding portions **106** of the slide ring **100** push the dogs **88.** Therefore, the side surface **88a** of each dog **88** on the opposite side from the rotation direction side is the contact surface at which the dog **88** contacts with the protruding portion **106** of the slide ring **100.** Note that also in the present embodiment, the contact surfaces of the dogs **88** extend straight in the axial direction. The dogs **88** are not inversely tapered.

Also in the second embodiment, the drive gears **72** to **76** and the driven gears **82** to **86** for the second speed to the sixth speed are helical gears. In the present embodiment, the drive gear **73** and the driven gear **83** for the third speed are configured so that the drive gear **73** receives, from the driven gear **83**, a thrust force in the direction toward the third slide ring **103.** The teeth of the third-speed drive gear **73** are inclined from the axial direction so as to extend toward the third slide ring **103** while extending toward the rotation direction side. The drive gear **74** and the driven gear **84** for the fourth speed are configured so that the drive gear **74** receives, from the driven gear **84**, a thrust force in the direction toward the first slide ring **101.** The teeth of the fourth-speed drive gear **74** are inclined from the axial direction so as to extend toward the first slide ring **101** while extending toward the rotation direction side. The drive gear **75** and the driven gear **85** for the fifth speed are configured so that the drive gear **75** receives, from the driven gear **85**, a thrust force in the direction toward the second slide ring **102.** The teeth of the fifth-speed drive gear **75** are inclined from the axial direction so as to extend toward the second slide ring **102** while extending toward the rotation direction side. The drive gear **76** and the driven gear **86** for the sixth speed are configured so that the drive gear **76** receives, from the driven gear **86**, a thrust force in the direction toward the second slide ring **102.** The teeth of the sixth-speed drive gear **76** are inclined from the axial direction so as to extend toward the second slide ring **102** while extending toward the rotation direction side.

### (Other embodiments)

In the first embodiment and the second embodiment, the drive gear **71** and the driven gear **81** for the first speed may be helical gears. In the first embodiment, the drive gear **71** and the driven gear **81** for the first speed may be configured so that the driven gear **81** receives, from the drive gear **71**, a thrust force in the direction toward the third slide ring **103.** In the first embodiment, the teeth of the driven gear **81** may be inclined from the axial direction so as to extend toward the opposite side from the third slide ring **103** while extending toward the rotation direction side. In the second embodiment, the drive gear **71** and the driven gear **81** for the first speed may be configured so that the drive gear **71** receives, from the driven gear **81**, a thrust force in the direction toward the third slide ring **103.** In the second embodiment, the teeth of the drive gear **71** may be inclined from the axial direction so as to extend toward the third slide ring **103** while extending toward the rotation direction side.

In the first embodiment or a variation thereof, the second-speed drive gear **72** and the driven gear **82** may be configured so that the driven gear **82** receives, from the drive gear **72**, a thrust force in the direction toward the first slide ring **101.** In the second embodiment or a variation thereof, the second-speed drive gear **72** and the driven gear **82** may be configured so that the drive gear **72** receives, from the driven gear **82**, a thrust force in the direction toward the first slide ring **101.**

In the first embodiment, all of the slide rings **101** to **103** are attached to the driven shaft **62.** In the second embodiment, all of the slide rings **101** to **103** are attached to the drive shaft **61.** That is, in the first embodiment and in the second embodiment, all of the slide rings **101** to **103** are attached to the same rotating shaft. However, one or more of the slide rings **101** to **103** may be attached to the drive shaft **61**, with the remainder attached to the driven shaft **62.** The slide rings **101** to **103** may be attached to different rotational shafts.

While the second-speed transmission gear pair **92**, the fourth-speed transmission gear pair **94**, the sixth-speed transmission gear pair **96**, the fifth-speed transmission gear pair **95**, the third-speed transmission gear pair **93** and the first-speed transmission gear pair **91** are arranged in this order from left to right in the embodiment described above, there is no particular limitation thereto. They may be arranged in that order from right to left. The order of arrangement is also not limited to the order above.

The vehicle is not limited to the motorcycle **1.** The vehicle may be a straddled vehicle other than a motorcycle. Note that a straddled vehicle refers to a vehicle that is straddled by a passenger. The vehicle is not limited to a straddled vehicle, but may be a vehicle of any other form. The vehicle may be an auto tricycle, an auto quadricycle, an ATV (All Terrain Vehicle), or a snowmobile, for example.

### REFERENCE SIGNS LIST

1: Motorcycle, 3: Internal combustion engine, 22: Rear wheel, 25: Chain, 60: Transmission, 61: Drive shaft, 62: Driven shaft, 71 to 76: Drive gear, 81 to 86: Driven gear, 88: Dog, 88a: Contact surface, 100 to 104: Slide ring, 108: Engagement hole, 201: First bearing, 202: Second bearing, 203: Third bearing, 204: Fourth bearing, 91 to 96: Transmission gear pair

## Claims

1. A transmission (60) comprising:
a first rotating shaft (61);
a second rotating shaft (62) arranged parallel to the first rotating shaft (61);
a first gear (73) attached to the first rotating shaft (61) so as to be unrotatable and axially unmovable relative to the first rotating shaft (61);
a second gear (83) that is attached to the second rotating shaft (62) so as to be rotatable and axially unmovable relative to the second rotating shaft (62) and is in mesh with the first gear (73); and
a slide ring (103) that is attached to the second rotating shaft (62) so as to be unrotatable and axially movable relative to the second rotating shaft (62) and is adjacent to the second gear (83) in an axial direction, wherein:
the second gear (83) includes dogs (88) that protrude in the axial direction;
the slide ring (103) includes engagement holes (108) into which the dogs (88) are inserted;
the dogs (88) each include a contact surface (88a) formed on a rotation direction side, wherein the contact surface (88a) is in contact with an edge portion of the engagement hole (108) while a torque is being transmitted between the second gear (83) and the slide ring (103);
the contact surface (88a) extends straight in the axial direction;
the first gear (73) and the second gear (83) are helical gears each including a plurality of teeth that are inclined relative to the axial direction, and are configured so that the second gear (83) receives, from the first gear (73), a thrust force in a direction toward the slide ring (103);
the first rotating shaft is a drive shaft (61) that is driven by a drive source (3);
the second rotating shaft is a driven shaft (62) that is driven by the drive shaft (61);
the contact surface (88a) is formed on the rotation direction side of the dog (88); and
teeth of the second gear (83) are inclined from the axial direction so as to extend toward an opposite side from the slide ring (103) side while extending toward a rotation direction (A2) side,
the transmission (60) further comprising:
two or more other first gears (74, 75, 76) that are attached to the first rotating shaft (61) so as to be axially unmovable relative to the first rotating shaft (61);
two or more other second gears (84, 85, 86) that are attached to the second rotating shaft (62) so as to be axially unmovable relative to the second rotating shaft (62); and
another slide ring (101, 102) that is attached to the second rotating shaft (62) so as to be unrotatable and axially movable relative to the second rotating shaft (62) and is adjacent to at least one of the other second gears (84, 85, 86) in the axial direction, wherein:
all of the other first gears (74, 75, 76) are attached to the first rotating shaft (61) so as to be unrotatable relative to the first rotating shaft (61);
all of the other second gears (84, 85, 86) are attached to the second rotating shaft (62) so as to be rotatable relative to the second rotating shaft (62);
the other second gears (84, 85, 86) include other dogs (88) that protrude in the axial direction;
the other slide ring (101, 102) includes other engagement holes (108) into which the other dogs (88) are inserted;
the other dogs (88) each include another contact surface (88a) formed on a rotation direction side, wherein the other contact surface (88a) is in contact with an edge portion of the other engagement hole (108) while a torque is being transmitted between the other second gears (84, 85, 86) and the other slide ring (101, 102);
the other contact surface (88a) extends straight in the axial direction; and
the other first gears (74, 75, 76) and the other second gears (84, 85, 86) are helical gears each including a plurality of teeth that are inclined relative to the axial direction, and are configured so that the other second gears (84, 85, 86) receive, from the other first gears (74, 75, 76), a thrust force in a direction toward the other slide ring (101, 102),
the transmission (60) further comprising:
first-speed to sixth-speed transmission gear pairs (91, 92, 93, 94, 95, 96) having different gear ratios, wherein at least the third-speed to sixth-speed transmission gear pairs (93, 94, 95, 96) are the first gear (73), the second gear (83), the other first gears (74, 75, 76) and the other second gears (84, 85, 86);
a first bearing (201) that is arranged on a first side in the axial direction relative to the first gear (73) and the other first gears (74, 75, 76), and rotatably supports the first rotating shaft (61);
a second bearing (202) that is arranged on a second side in the axial direction relative to the first gear (73) and the other first gears (74, 75, 76), and rotatably supports the first rotating shaft (61), wherein the second side in the axial direction is generally opposite to the first side in the axial direction;
a third bearing (203) that is arranged on the first side in the axial direction relative to the second gear (83) and the other second gears (84, 85, 86), and rotatably supports the second rotating shaft (62); and
a fourth bearing (204) that is arranged on the second side in the axial direction relative to the second gear (83) and the other second gears (84, 85, 86), and rotatably supports the second rotating shaft (62),
wherein the second-speed transmission gear pair (92) is arranged farthest on the first side in the axial direction, and the first-speed transmission gear pair (91) is arranged farthest on the second side in the axial direction.

2. A transmission (60) comprising:
a first rotating shaft (62);
a second rotating shaft (61) arranged parallel to the first rotating shaft (61);
a first gear (83) attached to the first rotating shaft (62) so as to be unrotatable and axially unmovable relative to the first rotating shaft (62);
a second gear (73) that is attached to the second rotating shaft (61) so as to be rotatable and axially unmovable relative to the second rotating shaft (61) and is in mesh with the first gear (83); and
a slide ring (103) that is attached to the second rotating shaft (61) so as to be unrotatable and axially movable relative to the second rotating shaft (61) and is adjacent to the second gear (73) in an axial direction, wherein:
the second gear (73) includes dogs (88) that protrude in the axial direction;
the slide ring (103) includes engagement holes (108) into which the dogs (88) are inserted;
the dogs (88) each include a contact surface (88a) formed on an opposite side from the rotation direction side, wherein the contact surface (88a) is in contact with an edge portion of the engagement hole (108) while a torque is being transmitted between the second gear (73) and the slide ring (103);
the contact surface (88a) extends straight in the axial direction;
the first gear (83) and the second gear (73) are helical gears each including a plurality of teeth that are inclined relative to the axial direction, and are configured so that the second gear (73) receives, from the first gear (83), a thrust force in a direction toward the slide ring (103);
the second rotating shaft is a drive shaft (61) that is driven by a drive source (3);
the first rotating shaft is a driven shaft (62) that is driven by the drive shaft (61);
the contact surface (88a) is formed on an opposite side from the rotation direction side of the dog (88); and
teeth of the second gear (73) are inclined from the axial direction so as to extend toward the slide ring (103) side while extending toward the rotation direction side,
the transmission (60) further comprising:
two or more other first gears (84, 85, 86) that are attached to the first rotating shaft (62) so as to be axially unmovable relative to the first rotating shaft (62);
two or more other second gears (74, 75, 76) that are attached to the second rotating shaft (61) so as to be axially unmovable relative to the second rotating shaft (61); and
another slide ring (101, 102) that is attached to the second rotating shaft (61) so as to be unrotatable and axially movable relative to the second rotating shaft (61) and is adjacent to at least one of the other second gears (74, 75, 76) in the axial direction, wherein:
all of the other first gears (84, 85, 86) are attached to the first rotating shaft (62) so as to be unrotatable relative to the first rotating shaft (62);
all of the other second gears (74, 75, 76) are attached to the second rotating shaft (61) so as to be rotatable relative to the second rotating shaft (61);
the other second gears (74, 75, 76) include other dogs (88) that protrude in the axial direction;
the other slide ring (101, 102) includes other engagement holes (108) into which the other dogs (88) are inserted;
the other dogs (88) each include another contact surface (88a) formed an opposite side from the rotation direction side, wherein the other contact surface (88a) is in contact with an edge portion of the other engagement hole (108) while a torque is being transmitted between the other second gears (74, 75, 76) and the other slide ring (101, 102);
the other contact surface (88a) extends straight in the axial direction; and
the other first gears (84, 85, 86) and the other second gears (74, 75, 76) are helical gears each including a plurality of teeth that are inclined relative to the axial direction, and are configured so that the other second gears (74, 75, 76) receive, from the other first gears (84, 85, 86), a thrust force in a direction toward the other slide ring (101, 102),
the transmission (60) further comprising:
first-speed to sixth-speed transmission gear pairs (91, 92, 93, 94, 95, 96) having different gear ratios, wherein at least the third-speed to sixth-speed transmission gear pairs (93, 94, 95, 96) are the first gear (83), the second gear (73), the other first gears (84, 85, 86) and the other second gears (74, 75, 76);
a first bearing (203) that is arranged on a first side in the axial direction relative to the first gear (83) and the other first gears (84, 85, 86), and rotatably supports the first rotating shaft (62);
a second bearing (204) that is arranged on a second side in the axial direction relative to the first gear (83) and the other first gears (84, 85, 86), and rotatably supports the first rotating shaft (62), wherein the second side in the axial direction is generally opposite to the first side in the axial direction;
a third bearing (201) that is arranged on the first side in the axial direction relative to the second gear (73) and the other second gears (74, 75, 76), and rotatably supports the second rotating shaft (61); and
a fourth bearing (202) that is arranged on the second side in the axial direction relative to the second gear (73) and the other second gears (74, 75, 76), and rotatably supports the second rotating shaft (61),
wherein the second-speed transmission gear pair (92) is arranged farthest on the first side in the axial direction, and the first-speed transmission gear pair (91) is arranged farthest on the second side in the axial direction.

3. The transmission (60) according to claim 1 or 2, comprising:
a first press-fit gear (72) that is press-fit to the first rotating shaft (61) so as to be unrotatable and axially unmovable relative to the first rotating shaft (61); and
a second mesh gear (82) that is attached to the second rotating shaft (62) so as to be rotatable and axially unmovable relative to the second rotating shaft (62) and meshes with the first press-fit gear (72), wherein:
a pair of the first press-fit gear (72) and the second mesh gear (82) is the second-speed transmission gear pair (92);
the first bearing (201) is arranged on a first side in the axial direction relative to the first press-fit gear (72); and
the first press-fit gear (72) and the second mesh gear (82) are helical gears each including a plurality of teeth that are inclined relative to the axial direction, and are configured so that the first press-fit gear (72) receives, from the second mesh gear (82), a thrust force in a direction toward a second side in the axial direction, wherein the second side in the axial direction is generally opposite to the first side in the axial direction.

4. The transmission (60) according to claim 1 or 2, wherein the first-speed to sixth-speed transmission gear pairs (91, 92, 93, 94, 95, 96) are the first gear (73), the second gear (83), the other first gears (71, 72, 74, 75, 76) and the other second gears (81, 82, 84, 85, 86).

5. The transmission (60) according to any one of claims 1 or 3, wherein the first-speed to sixth-speed transmission gear pairs (91, 92, 93, 94, 95, 96) are arranged in the following order, from the first side toward the second side in the axial direction: the second-speed transmission gear pair (92), the fourth-speed transmission gear pair (94), the sixth-speed transmission gear pair (96), the fifth-speed transmission gear pair (95), the third-speed transmission gear pair (93), and the first-speed transmission gear pair (91).

6. The transmission (60) according to claim 4, wherein the first-speed to sixth-speed transmission gear pairs (91, 92, 93, 94, 95, 96) are arranged in the following order, from the first side toward the second side in the axial direction: the second-speed transmission gear pair (92), the fourth-speed transmission gear pair (94), the sixth-speed transmission gear pair (96), the fifth-speed transmission gear pair (95), the third-speed transmission gear pair (93), and the first-speed transmission gear pair (91).

7. The transmission (60) according to any one of claims 1 to 6, wherein inclination angles of the helical gears are set so that the inclination angle is smaller for a higher gear number.

8. The transmission (60) according to any one of claims 1 to 7, wherein teeth of the helical gears are inclined by 5° to 30° relative to the axial direction.

9. A vehicle (1) comprising:
the transmission (60) according to any one of claims 1 to 8, comprising:
a drive source (3) that is linked to, and drives, one of the first rotating shaft (61) and the second rotating shaft (62);
a power transmitting member (25) that is linked to the other one of the first rotating shaft (61) and the second rotating shaft (62); and
a driving wheel (22) that is linked to the power transmitting member (25).

## Patentansprüche

1. Ein Getriebe (60) umfassend:
eine erste Drehwelle (61);
eine zweite Drehwelle (62), die parallel zur ersten Drehwelle (61) angeordnet ist;
ein erstes Zahnrad (73), das an der ersten Drehwelle (61) so befestigt ist, dass es nicht drehbar und axial unbeweglich in Bezug auf die erste Drehwelle (61) ist;
ein zweites Zahnrad (83), das an der zweiten Drehwelle (62) so befestigt ist, dass es drehbar und axial unbeweglich relativ zur zweiten Drehwelle (62) ist und mit dem ersten Zahnrad (73) in Eingriff steht; und
einen Gleitring (103), der an der zweiten Drehwelle (62) so angebracht ist, dass er nicht drehbar und relativ zur zweiten Drehwelle (62) axial beweglich ist, und der in einer axialen Richtung an das zweite Zahnrad (83) angrenzt, wobei:
das zweite Zahnrad (83) Mitnehmer (88) aufweist, die in axialer Richtung vorstehen;
der Gleitring (103) Eingriffslöcher (108) aufweist, in die die Mitnehmer (88) eingesetzt sind;
die Mitnehmer (88) jeweils eine Kontaktfläche (88a) aufweisen, die auf einer Drehrichtungsseite ausgebildet ist, wobei die Kontaktfläche (88a) in Kontakt mit einem Randabschnitt des Eingriffslochs (108) ist, während ein Drehmoment zwischen dem zweiten Zahnrad (83) und dem Gleitring (103) übertragen wird;
die Kontaktfläche (88a) sich gerade in der axialen Richtung erstreckt;
das erste Zahnrad (73) und das zweite Zahnrad (83) Schrägzahnräder sind, die jeweils eine Vielzahl von Zähnen aufweisen, die relativ zu der axialen Richtung geneigt sind, und so konfiguriert sind, dass das zweite Zahnrad (83) von dem ersten Zahnrad (73) eine Schubkraft in einer Richtung zu dem Gleitring (103) hin aufnimmt;
die erste Drehwelle eine Antriebswelle (61) ist, die von einer Antriebsquelle (3) angetrieben wird;
die zweite Drehwelle eine angetriebene Welle (62) ist, die von der Antriebswelle (61) angetrieben wird;
die Kontaktfläche (88a) auf der Drehrichtungsseite des Mitnehmers (88) ausgebildet ist; und
die Zähne des zweiten Zahnrads (83) aus der axialen Richtung so geneigt sind, dass sie sich zu einer gegenüberliegenden Seite von der Seite des Gleitrings (103) erstrecken, während sie sich zu einer Seite der Drehrichtung (A2) erstrecken,
das Getriebe (60) ferner umfasst:
zwei oder mehrere weitere erste Zahnräder (74, 75, 76), die an der ersten Drehwelle (61) so befestigt sind, dass sie relativ zur ersten Drehwelle (61) axial unbeweglich sind;
zwei oder mehrere weitere zweite Zahnräder (84, 85, 86), die an der zweiten Drehwelle (62) so befestigt sind, dass sie relativ zur zweiten Drehwelle (62) axial unbeweglich sind; und
einen weiteren Gleitring (101, 102), der an der zweiten Drehwelle (62) so angebracht ist, dass er nicht drehbar und relativ zu der zweiten Drehwelle (62) axial beweglich ist, und der in der axialen Richtung an mindestens eines der weiteren zweiten Zahnräder (84, 85, 86) angrenzt, wobei:
alle weiteren ersten Zahnräder (74, 75, 76) an der ersten Drehwelle (61) so befestigt sind, dass sie relativ zu der ersten Drehwelle (61) nicht drehbar sind;
alle weiteren zweiten Zahnräder (84, 85, 86) sind an der zweiten Drehwelle (62) so angebracht, dass sie relativ zur zweiten Drehwelle (62) drehbar sind;
die weiteren zweiten Zahnräder (84, 85, 86) weitere Mitnehmer (88) aufweisen, die in der axialen Richtung vorstehen;
der weitere Gleitring (101, 102) weitere Eingriffslöcher (108) aufweist, in die die weiteren Mitnehmer (88) eingesetzt werden;
die weiteren Mitnehmer (88) jeweils eine weitere Kontaktfläche (88a) aufweisen, die auf einer Drehrichtungsseite ausgebildet ist, wobei die weitere Kontaktfläche (88a) in Kontakt mit einem Randabschnitt des weiteren Eingriffslochs (108) ist, während ein Drehmoment zwischen den weiteren zweiten Zahnrädern (84, 85, 86) und dem weiteren Gleitring (101, 102) übertragen wird;
sich die weitere Kontaktfläche (88a) gerade in der axialen Richtung erstreckt; und
die weiteren ersten Zahnräder (74, 75, 76) und die weiteren zweiten Zahnräder (84, 85, 86) Schrägzahnräder sind, die jeweils eine Vielzahl von Zähnen aufweisen, die relativ zu der axialen Richtung geneigt sind, und so konfiguriert sind, dass die weiteren zweiten Zahnräder (84, 85, 86) von den weiteren ersten Zahnrädern (74, 75, 76) eine Schubkraft in einer Richtung zu dem weiteren Gleitring (101, 102) hin aufnehmen,
wobei das Getriebe (60) ferner umfasst:
Getriebezahnradpaare des ersten bis sechsten Ganges (91, 92, 93, 94, 95, 96) mit unterschiedlichen Übersetzungsverhältnissen, wobei zumindest die Getriebezahnradpaare des dritten bis sechsten Ganges (93, 94, 95, 96) das erste Zahnrad (73), das zweite Zahnrad (83), die weiteren ersten Zahnräder (74, 75, 76) und die weiteren zweiten Zahnräder (84, 85, 86) sind;
ein erstes Lager (201), das auf einer ersten Seite in der axialen Richtung relativ zu dem ersten Zahnrad (73) und den weiteren ersten Zahnrädern (74, 75, 76) angeordnet ist und die erste Drehwelle (61) drehbar lagert;
ein zweites Lager (202), das auf einer zweiten Seite in der axialen Richtung relativ zu dem ersten Zahnrad (73) und den weiteren ersten Zahnrädern (74, 75, 76) angeordnet ist und die erste Drehwelle (61) drehbar lagert, wobei die zweite Seite in der axialen Richtung im Allgemeinen entgegengesetzt zu der ersten Seite in der axialen Richtung ist;
ein drittes Lager (203), das auf der ersten Seite in axialer Richtung relativ zu dem zweiten Zahnrad (83) und den weiteren zweiten Zahnrädern (84, 85, 86) angeordnet ist und die zweite Drehwelle (62) drehbar lagert; und
ein viertes Lager (204), das auf der zweiten Seite in der axialen Richtung relativ zu dem zweiten Zahnrad (83) und den weiteren zweiten Zahnrädern (84, 85, 86) angeordnet ist und die zweite Drehwelle (62) drehbar lagert,
wobei das Getriebezahnradpaar des zweiten Gangs (92) in axialer Richtung am weitesten auf der ersten Seite angeordnet ist und das Getriebezahnradpaar des ersten Gangs (91) in axialer Richtung am weitesten auf der zweiten Seite angeordnet ist.

2. Ein Getriebe (60) umfassend:
eine erste Drehwelle (62);
eine zweite Drehwelle (61), die parallel zur ersten Drehwelle (61) angeordnet ist;
ein erstes Zahnrad (83), das an der ersten Drehwelle (62) so befestigt ist, dass es nicht drehbar und axial unbeweglich in Bezug auf die erste Drehwelle (62) ist;
ein zweites Zahnrad (73), das an der zweiten Drehwelle (61) so befestigt ist, dass es drehbar und axial unbeweglich relativ zur zweiten Drehwelle (61) ist und mit dem ersten Zahnrad (83) in Eingriff steht; und
einen Gleitring (103), der an der zweiten Drehwelle (61) so angebracht ist, dass er nicht drehbar und relativ zur zweiten Drehwelle (61) axial beweglich ist, und der in einer axialen Richtung an das zweite Zahnrad (73) angrenzt, wobei:
das zweite Zahnrad (73) Mitnehmer (88) aufweist, die in axialer Richtung vorstehen;
der Gleitring (103) Eingriffslöcher (108) aufweist, in die die Mitnehmer (88) eingesetzt sind;
die Mitnehmer (88) jeweils eine Kontaktfläche (88a) aufweisen, die auf einer Drehrichtungsseite ausgebildet ist, wobei die Kontaktfläche (88a) in Kontakt mit einem Randabschnitt des Eingriffslochs (108) ist, während ein Drehmoment zwischen dem zweiten Zahnrad (73) und dem Gleitring (103) übertragen wird;
die Kontaktfläche (88a) sich gerade in der axialen Richtung erstreckt;
das erste Zahnrad (83) und das zweite Zahnrad (73) Schrägzahnräder sind, die jeweils eine Vielzahl von Zähnen aufweisen, die relativ zu der axialen Richtung geneigt sind, und so konfiguriert sind, dass das zweite Zahnrad (73) von dem ersten Zahnrad (83) eine Schubkraft in einer Richtung zu dem Gleitring (103) hin aufnimmt;
die zweite Drehwelle eine Antriebswelle (61) ist, die von einer Antriebsquelle (3) angetrieben wird;
die erste Drehwelle ist eine Antriebswelle (62), die von der Antriebswelle (61) angetrieben wird;
die Kontaktfläche (88a) auf einer der Drehrichtungsseite des Mitnehmers (88) gegenüberliegenden Seite ausgebildet ist; und
die Zähne des zweiten Zahnrads (73) aus der axialen Richtung so geneigt sind, dass sie sich in Richtung der Seite des Gleitrings (103) erstrecken, während sie sich in Richtung der Drehrichtungsseite erstrecken,
das Getriebe (60) ferner umfasst:
zwei oder mehrere weitere erste Zahnräder (84, 85, 86), die an der ersten Drehwelle (62) so befestigt sind, dass sie relativ zur ersten Drehwelle (62) axial unbeweglich sind;
zwei oder mehrere weitere zweite Zahnräder (74, 75, 76), die an der zweiten Drehwelle (61) so befestigt sind, dass sie relativ zur zweiten Drehwelle (61) axial unbeweglich sind; und
einen weiteren Gleitring (101, 102), der an der zweiten Drehwelle (61) so angebracht ist, dass er nicht drehbar und relativ zu der zweiten Drehwelle (61) axial beweglich ist, und der in der axialen Richtung an mindestens eines der weiteren zweiten Zahnräder (74, 75, 76) angrenzt, wobei:
alle weiteren ersten Zahnräder (84, 85, 86) an der ersten Drehwelle (62) so befestigt sind, dass sie relativ zu der ersten Drehwelle (62) nicht drehbar sind;
alle weiteren zweiten Zahnräder (74, 75, 76) sind an der zweiten Drehwelle (61) so angebracht, dass sie relativ zur zweiten Drehwelle (61) drehbar sind;
die weiteren zweiten Zahnräder (74, 75, 76) weitere Mitnehmer (88) aufweisen, die in der axialen Richtung vorstehen;
der weitere Gleitring (101, 102) weitere Eingriffslöcher (108) aufweist, in die die weiteren Mitnehmer (88) eingesetzt werden;
die weiteren Mitnehmer (88) jeweils eine weitere Kontaktfläche (88a) aufweisen, die auf einer Drehrichtungsseite ausgebildet ist, wobei die weitere Kontaktfläche (88a) in Kontakt mit einem Randabschnitt des weiteren Eingriffslochs (108) ist, während ein Drehmoment zwischen den weiteren zweiten Zahnrädern (74, 75, 76) und dem weiteren Gleitring (101, 102) übertragen wird;
sich die weitere Kontaktfläche (88a) gerade in der axialen Richtung erstreckt; und
die weiteren ersten Zahnräder (84, 85, 86) und die weiteren zweiten Zahnräder (74, 75, 76) Schrägzahnräder sind, die jeweils eine Vielzahl von Zähnen aufweisen, die relativ zu der axialen Richtung geneigt sind, und so konfiguriert sind, dass die weiteren zweiten Zahnräder (74, 75, 76) von den weiteren ersten Zahnrädern (84, 85, 86) eine Schubkraft in einer Richtung zu dem weiteren Gleitring (101, 102) hin aufnehmen,
wobei das Getriebe (60) ferner umfasst:
Getriebezahnradpaare des ersten bis sechsten Ganges (91, 92, 93, 94, 95, 96) mit unterschiedlichen Übersetzungsverhältnissen, wobei zumindest die Getriebezahnradpaare des dritten bis sechsten Ganges (93, 94, 95, 96) das erste Zahnrad (83), das zweite Zahnrad (73), die weiteren ersten Zahnräder (84, 85, 86) und die weiteren zweiten Zahnräder (74, 75, 76) sind;
ein erstes Lager (203), das auf einer ersten Seite in der axialen Richtung relativ zu dem ersten Zahnrad (83) und den weiteren ersten Zahnrädern (84, 85, 86) angeordnet ist und die erste Drehwelle (62) drehbar lagert;
ein zweites Lager (204), das auf einer zweiten Seite in der axialen Richtung relativ zu dem ersten Zahnrad (83) und den weiteren ersten Zahnrädern (84, 85, 86) angeordnet ist und die erste Drehwelle (62) drehbar lagert, wobei die zweite Seite in der axialen Richtung im Allgemeinen entgegengesetzt zu der ersten Seite in der axialen Richtung ist;
ein drittes Lager (201), das auf der ersten Seite in axialer Richtung relativ zu dem zweiten Zahnrad (73) und den weiteren zweiten Zahnrädern (74, 75, 76) angeordnet ist und die zweite Drehwelle (61) drehbar lagert; und
ein viertes Lager (202), das auf der zweiten Seite in der axialen Richtung relativ zu dem zweiten Zahnrad (73) und den weiteren zweiten Zahnrädern (74, 75, 76) angeordnet ist und die zweite Drehwelle (61) drehbar lagert,
wobei das Getriebezahnradpaar des zweiten Gangs (92) in axialer Richtung am weitesten auf der ersten Seite angeordnet ist und das Getriebezahnradpaar des ersten Gangs (91) in axialer Richtung am weitesten auf der zweiten Seite angeordnet ist.

3. Das Getriebe (60) gemäß Anspruch 1 oder 2, umfassend:
ein erstes Einpresszahnrad (72), das mit der ersten Drehwelle (61) pressgepasst ist, so dass es nicht drehbar und axial unbeweglich in Bezug auf die erste Drehwelle (61) ist; und
ein zweites Eingriffszahnrad (82), das an der zweiten Drehwelle (62) so angebracht ist, dass es drehbar und axial unbeweglich relativ zu der zweiten Drehwelle (62) ist und mit dem ersten Einpresszahnrad (72) kämmt, wobei:
ein Paar aus dem ersten Einpresszahnrad (72) und dem zweiten Eingriffszahnrad (82) das Getriebezahnradpaar (92) für den zweiten Gang ist;
das erste Lager (201) auf einer ersten Seite in der axialen Richtung relativ zu dem ersten Einpresszahnrad (72) angeordnet ist; und
das erste Einpresszahnrad (72) und das zweite Eingriffszahnrad (82) Schrägzahnräder sind, die jeweils eine Vielzahl von Zähnen aufweisen, die relativ zu der axialen Richtung geneigt sind, und so konfiguriert sind, dass das erste Einpresszahnrad (72) von dem zweiten Eingriffszahnrad (82) eine Schubkraft in einer Richtung zu einer zweiten Seite in der axialen Richtung aufnimmt, wobei die zweite Seite in der axialen Richtung im Allgemeinen entgegengesetzt zu der ersten Seite in der axialen Richtung ist.

4. Das Getriebe (60) gemäß Anspruch 1 oder 2, wobei
die Getriebegangpaare des ersten bis sechsten Gangs (91, 92, 93, 94, 95, 96) sind der erste Gang (73), der zweite Gang (83), die weiteren ersten Gänge (71, 72, 74, 75, 76) und die weiteren zweiten Gänge (81, 82, 84, 85, 86).

5. Das Getriebe (60) gemäß einem der Ansprüche 1 bis 3, wobei
die Getriebezahnradpaare des ersten bis sechsten Gangs (91, 92, 93, 94, 95, 96) in der folgenden Reihenfolge von der ersten Seite zur zweiten Seite in axialer Richtung angeordnet sind: das Getriebezahnradpaar des zweiten Gangs (92), das Getriebezahnradpaar des vierten Gangs (94), das Getriebezahnradpaar des sechsten Gangs (96), das Getriebezahnradpaar des fünften Gangs (95), das Getriebezahnradpaar des dritten Gangs (93) und das Getriebezahnradpaar des ersten Gangs (91).

6. Das Getriebe (60) gemäß Anspruch 4, wobei
die Getriebezahnradpaare des ersten bis sechsten Gangs (91, 92, 93, 94, 95, 96) in der folgenden Reihenfolge von der ersten Seite zur zweiten Seite in axialer Richtung angeordnet sind: das Getriebezahnradpaar des zweiten Gangs (92), das Getriebezahnradpaar des vierten Gangs (94), das Getriebezahnradpaar des sechsten Gangs (96), das Getriebezahnradpaar des fünften Gangs (95), das Getriebezahnradpaar des dritten Gangs (93) und das Getriebezahnradpaar des ersten Gangs (91).

7. Das Getriebe (60) gemäß einem der Ansprüche 1 bis 6, wobei
die Neigungswinkel der Schrägzahnräder so eingestellt sind, dass der Neigungswinkel bei einer höheren Gangzahl kleiner ist.

8. Das Getriebe (60) gemäß einem der Ansprüche 1 bis 7, wobei
die Zähne der Schrägzahnräder sind um 5° bis 30° gegenüber der axialen Richtung geneigt.

9. Ein Fahrzeug (1) umfassend:
das Getriebe (60) gemäß einem der Ansprüche 1 bis 7, umfassend:
eine Antriebsquelle (3), die mit einer der ersten Drehwelle (61) und der zweiten Drehwelle (62) verbunden ist und diese antreibt;
ein Kraftübertragungselement (25), das mit der anderen von der ersten Drehwelle (61) und der zweiten Drehwelle (62) verbunden ist; und
ein Antriebsrad (22), das mit dem Kraftübertragungselement (25) verbunden ist.

## Revendications

1. Transmission (60) comprenant :
un premier arbre tournant (61),
un second arbre tournant (62) disposé parallèlement au premier arbre tournant (61),
un premier pignon (73) fixé au premier arbre tournant (61) de façon à ne pas pouvoir tourner et ne pas pouvoir se déplacer axialement par rapport au premier arbre tournant (61),
un second pignon (83) qui est fixé au second arbre tournant (62) de sorte à pouvoir tourner et ne pas pouvoir se déplacer axialement par rapport au second arbre tournant (62) et en prise avec le premier pignon (73), et
une bague coulissante (103) qui est fixée au second arbre tournant (62) de sorte à ne pas pouvoir tourner et pouvoir se déplacer axialement par rapport au second arbre tournant (62) et adjacente au second pignon (83) dans la direction axiale, où
le second pignon (83) inclut des crabots (88) qui dépassent dans la direction axiale,
la bague coulissante (103) inclut des trous d'engrènement (108) dans lesquels sont insérés les crabots (88),
les crabots (88) incluent chacun une surface de contact (88a) formée sur un flanc dans la direction de rotation, la surface de contact (88a) étant en contact avec un bord du trou d'engrènement (108) lorsqu'un couple est transmis entre le second pignon (83) et la bague coulissante (103),
la surface de contact (88a) s'étend tout droit dans la direction axiale,
le premier pignon (73) et le second pignon (83) sont des pignons hélicoïdaux incluant chacun une pluralité de dents qui sont inclinées par rapport à la direction axiale et ils sont configurés de sorte à ce que le second pignon (83) reçoive du premier pignon (73) une force de poussée dans le sens orienté vers la bague coulissante (103),
le premier arbre tournant est un arbre d'entraînement (61) qui est entraîné par une source d'entraînement (3),
le second arbre tournant (62) est un arbre entraîné (62) qui est entraîné par l'arbre d'entraînement (61),
la surface de contact (88a) est formée sur le flanc de la direction de rotation du crabot (88), et
les dents du second pignon (83) sont inclinées depuis la direction axiale de sorte à s'étendre vers le côté opposé depuis la bague coulissante (103) tout en s'étendant vers la direction de rotation (A2),
la transmission (60) comprenant en outre :
deux autres premiers pignons (74, 75, 76) ou plus qui sont fixés au premier arbre tournant (61) de sorte à ne pas pouvoir se déplacer axialement par rapport au premier arbre tournant (61),
deux autres seconds pignons (84, 85, 86) ou plus qui sont fixés au second arbre tournant (62) de sorte à ne pas pouvoir se déplacer axialement par rapport au second arbre tournant (62), et
une autre bague coulissante (101, 102) qui est fixée au second arbre tournant (62) de sorte à ne pas pouvoir tourner et pouvoir se déplacer axialement par rapport au second arbre tournant (62), et adjacente à au moins l'un des autres seconds pignons (84, 85, 86) dans la direction axiale, où
tous les autres premiers pignons (74, 75, 76) sont fixés au premier arbre tournant (61) de sorte à ne pas pouvoir tourner par rapport au premier arbre tournant (61),
tous les autres seconds pignons (84, 85, 86) sont fixés au second arbre tournant (62) de sorte à pouvoir tourner par rapport au second arbre tournant (62),
les autres seconds pignons (84, 85, 86) incluent d'autres crabots (88) qui dépassent dans la direction axiale,
l'autre bague coulissante (101, 102) inclut d'autres trous d'engrènement (108) dans lesquels sont insérés les autres crabots (88),
les autres crabots (88) incluent chacun une autre surface de contact (88a) formée sur le flanc de la direction de rotation, l'autre surface de contact (88a) étant en contact avec un bord de l'autre trou d'engrènement (108) lorsqu'un couple est transmis entre les autres seconds pignons (84, 85, 86) et l'autre bague coulissante (101, 102),
l'autre surface de contact (88a) s'étend tout droit dans la direction axiale, et
les autres premiers pignons (74, 75, 76) et les autres seconds pignons (84, 85, 86) sont des pignons hélicoïdaux incluant chacun une pluralité de dents qui sont inclinées par rapport à la direction axiale et sont configurées de sorte à ce que les autres seconds pignons (84, 85, 86) reçoivent, depuis les autres premiers pignons (74, 75, 76) une force de poussée dans le sens orienté vers l'autre bague coulissante (101, 102),
la transmission (60) comprenant en outre :
des paires de pignon de transmission (91, 92, 93, 94, 95, 96) de la première vitesse à la sixième vitesse présentant des rapports de démultiplication différents, dans lesquelles au moins les paires de pignon de transmission (93, 94, 95, 96) de la troisième vitesse à la sixième vitesse sont le premier pignon (73), le second pignon (83), les autres premiers pignons (74, 75, 76) et les autres seconds pignons (84, 85, 86),
un premier palier (201) qui est disposé sur un premier côté dans la direction axiale par rapport au premier pignon (73) et aux autres premiers pignons (74, 75, 76) et qui supporte le premier arbre tournant (61) pour pouvoir tourner,
un deuxième palier (202) qui est disposé sur un second côté dans la direction axiale par rapport au premier pignon (73) et aux autres premiers pignons (74, 75, 76) et qui supporte le premier arbre tournant (61) pour pouvoir tourner, le second côté dans la direction axiale étant globalement opposé au premier côté dans la direction axiale,
un troisième palier (203) qui est disposé sur le premier côté dans la direction axiale par rapport au second pignon (83) et aux autres seconds pignons (84, 85, 86) et qui supporte le second arbre tournant (62) pour pouvoir tourner, et
un quatrième palier (204) qui est disposé sur le second côté dans la direction axiale par rapport au second pignon (83) et aux autres seconds pignons (84, 85, 86) et qui supporte le second arbre tournant (62) pour pouvoir tourner,
dans lequel la paire de pignons de transmission (92) de deuxième vitesse est disposée le plus loin sur le premier côté dans la direction axiale, et où la paire de pignons de transmission (91) de première vitesse est disposée le plus loin sur le second côté dans la direction axiale.

2. Transmission (60) comprenant :
un premier arbre tournant (62),
un second arbre tournant (61) disposé parallèlement au premier arbre tournant (62),
un premier pignon (83) fixé au premier arbre tournant (62) de façon à ne pas pouvoir tourner et ne pas pouvoir se déplacer axialement par rapport au premier arbre tournant (62),
un second pignon (73) qui est fixé au second arbre tournant (61) de sorte à pouvoir tourner et ne pas pouvoir se déplacer axialement par rapport au second arbre tournant (61) et en prise avec le premier pignon (83), et
une bague coulissante (103) qui est fixée au second arbre tournant (61) de sorte à ne pas pouvoir tourner et pouvoir se déplacer axialement par rapport au second arbre tournant (61) et adjacente au second pignon (73) dans la direction axiale, où
le second pignon (73) inclut des crabots (88) qui dépassent dans la direction axiale,
la bague coulissante (103) inclut des trous d'engrènement (108) dans lesquels sont insérés les crabots (88),
les crabots (88) incluent chacun une surface de contact (88a) formée sur un flanc dans la direction de rotation, la surface de contact (88a) étant en contact avec un bord du trou d'engrènement (108) lorsqu'un couple est transmis entre le second pignon (83) et la bague coulissante (103),
la surface de contact (88a) s'étend tout droit dans la direction axiale,
le premier pignon (83) et le second pignon (73) sont des pignons hélicoïdaux incluant chacun une pluralité de dents qui sont inclinées par rapport à la direction axiale et ils sont configurés de sorte à ce que le second pignon (73) reçoive du premier pignon (83) une force de poussée dans le sens orienté vers la bague coulissante (103),
le second arbre tournant est un arbre d'entraînement (61) qui est entraîné par une source d'entraînement (3),
le premier arbre tournant est un arbre entraîné (62) qui est entraîné par l'arbre d'entraînement (61),
la surface de contact (88a) est formée sur le flanc opposé à la direction de rotation du crabot (88), et
les dents du second pignon (73) sont inclinées depuis la direction axiale de sorte à s'étendre vers le flanc de la bague coulissante (103) tout en s'étendant vers la direction de rotation,
la transmission (60) comprenant en outre :
deux autres premiers pignons (84, 85, 86) ou plus qui sont fixés au premier arbre tournant (62) de sorte à ne pas pouvoir se déplacer axialement par rapport au premier arbre tournant (62),
deux autres seconds pignons (74, 75, 76) ou plus qui sont fixés au second arbre tournant (61) de sorte à ne pas pouvoir se déplacer axialement par rapport au second arbre tournant (61), et
une autre bague coulissante (101, 102) qui est fixée au second arbre tournant (61) de sorte à ne pas pouvoir tourner et pouvoir se déplacer axialement par rapport au second arbre tournant (61), et adjacente à au moins l'un des autres seconds pignons (74, 75, 76) dans la direction axiale, où
tous les autres premiers pignons (84, 85, 86) sont fixés au premier arbre tournant (62) de sorte à ne pas pouvoir tourner par rapport au premier arbre tournant (62),
tous les autres seconds pignons (74, 75, 76) sont fixés au second arbre tournant (61) de sorte à pouvoir tourner par rapport au second arbre tournant (61),
les autres seconds pignons (74, 75, 76) incluent d'autres crabots (88) qui dépassent dans la direction axiale,
l'autre bague coulissante (101, 102) inclut d'autres trous d'engrènement (108) dans lesquels sont insérés les autres crabots (88),
les autres crabots (88) incluent chacun une autre surface de contact (88a) formée sur le flanc opposé depuis le flanc de la direction de rotation, l'autre surface de contact (88a) étant en contact avec un bord de l'autre trou d'engrènement (108) lorsqu'un couple est transmis entre les autres seconds pignons (74, 75, 76) et l'autre bague coulissante (101, 102),
l'autre surface de contact (88a) s'étend tout droit dans la direction axiale, et
les autres premiers pignons (84, 85, 86) et les autres seconds pignons (74, 75, 76) sont des pignons hélicoïdaux incluant chacun une pluralité de dents qui sont inclinées par rapport à la direction axiale et sont configurées de sorte à ce que les autres seconds pignons (74, 75, 76) reçoivent, depuis les autres premiers pignons (84, 85, 86), une force de poussée dans le sens orienté vers l'autre bague coulissante (101, 102),
la transmission (60) comprenant en outre :
des paires de pignon de transmission (91, 92, 93, 94, 95, 96) de la première vitesse à la sixième vitesse présentant des rapports de démultiplication différents, dans lesquelles au moins les paires de pignon de transmission (93, 94, 95, 96) de la troisième vitesse à la sixième vitesse sont le premier pignon (83), le second pignon (73), les autres premiers pignons (84, 85, 86) et les autres seconds pignons (74, 75, 76),
un premier palier (203) qui est disposé sur un premier côté dans la direction axiale par rapport au premier pignon (83) et aux autres premiers pignons (84, 85, 86) et qui supporte le premier arbre tournant (62) pour pouvoir tourner,
un deuxième palier (204) qui est disposé sur un second côté dans la direction axiale par rapport au premier pignon (83) et aux autres premiers pignons (84, 85, 86) et qui supporte le premier arbre tournant (62) pour pouvoir tourner, le second côté dans la direction axiale étant globalement opposé au premier côté dans la direction axiale,
un troisième palier (201) qui est disposé sur le premier côté dans la direction axiale par rapport au second pignon (73) et aux autres seconds pignons (74, 75, 76) et qui supporte le second arbre tournant (61) pour pouvoir tourner, et
un quatrième palier (202) qui est disposé sur le second côté dans la direction axiale par rapport au second pignon (73) et aux autres seconds pignons (74, 75, 76) et qui supporte le second arbre tournant (61) pour pouvoir tourner,
dans lequel la paire de pignons de transmission (92) de deuxième vitesse est disposée le plus loin sur le premier côté dans la direction axiale, et où la paire de pignons de transmission (91) de première vitesse est disposée le plus loin sur le second côté dans la direction axiale.

3. Transmission (60) selon la revendication 1 ou la revendication 2, comprenant :
un premier pignon ajusté à force (72) qui est ajusté sur le premier arbre tournant (61) de sorte à ne pas pouvoir tourner et ne pas pouvoir se déplacer axialement par rapport au premier arbre tournant (61), et
un second pignon d'engrènement (82) qui est fixé au second arbre tournant (62) de sorte à pouvoir tourner et ne pas pouvoir se déplacer axialement par rapport au second arbre tournant (62) et qui s'engrène avec le premier pignon ajusté à force (72), où
la paire constituée du premier pignon ajusté à force (72) et du second pignon d'engrènement (82) représente la paire de pignons de transmission (92) de deuxième vitesse,
le premier palier (201) est disposé sur un premier côté dans la direction axiale par rapport au premier pignon ajusté à force (72), et
le premier pignon ajusté à force (72) et le second pignon d'engrènement (82) sont des pignons hélicoïdaux incluant chacun une pluralité de dents qui sont inclinées par rapport à la direction axiale, et ils sont configurés de sorte à ce que le premier pignon ajusté à force (72) reçoive, du second pignon d'engrènement (82), une force de poussée dans la direction vers un second flanc dans la direction axiale, le second flanc dans la direction axiale étant globalement opposé au premier flanc dans la direction axiale.

4. Transmission (60) selon la revendication 1 ou la revendication 2, dans laquelle les paires de pignons de transmission (91, 92, 93, 94, 95, 96) de première vitesse à sixième vitesse sont le premier pignon (73), le second pignon (83), les autres premiers pignons (71, 72, 74, 75, 76) et les autres seconds pignons (80, 82, 84, 85, 86).

5. Transmission (60) selon l'une quelconque des revendications 1 à 3, dans laquelle les paires de pignons de transmission (91, 92, 93, 94, 95, 96) de première vitesse à sixième vitesse sont disposées dans l'ordre suivant depuis le premier flanc jusqu'au second flanc dans la direction axiale : la paire de pignons de transmission (92) de deuxième vitesse, la paire de pignons de transmission (94) de quatrième vitesse, la paire de pignons de transmission (96) de sixième vitesse, la paire de pignons de transmission (95) de cinquième vitesse, la paire de pignons de transmission (93) de troisième vitesse et la paire de pignons de transmission (91) de première vitesse.

6. Transmission (60) selon la revendication 4, dans laquelle les paires de pignons de transmission (91, 92, 93, 94, 95, 96) de première vitesse à sixième vitesse sont disposées dans l'ordre suivant, du premier flanc jusqu'au second flanc dans la direction axiale : la paire de pignons de transmission (92) de deuxième vitesse, la paire de pignons de transmission (94) de quatrième vitesse, la paire de pignons de transmission (96) de sixième vitesse, la paire de pignons de transmission (95) de cinquième vitesse, la paire de pignons de transmission (93) de troisième vitesse et la paire de pignons de transmission (91) de première vitesse.

7. Transmission (60) selon l'une quelconque des revendications 1 à 6, dans laquelle les angles d'inclinaison des pignons hélicoïdaux sont établis de sorte à ce que l'angle d'inclinaison soit plus petit pour un numéro de pignon plus grand.

8. Transmission (60) selon l'une quelconque des revendications 1 à 7, dans laquelle les dents des pignons hélicoïdaux sont inclinées de 5 ° à 30 ° par rapport à la direction axiale.

9. Véhicule (1) comprenant :
la transmission (60) conforme à l'une quelconque des revendications 1 à 8, comprenant :
une source d'entraînement (3) qui est reliée à l'un du premier arbre tournant (61) et du second arbre tournant (62) et qui entraîne celui-ci,
un élément de transmission de puissance (25) qui est relié à l'autre du premier arbre tournant (61) et du second arbre tournant (62), et
une roue d'entraînement (22) qui est reliée à l'élément de transmission de puissance (25).
